Europäisches Patentamt

European Patent Office

Office européen des brevets

(19)

(11) **EP 0 726 540 B1**

(12) **EUROPEAN PATENT SPECIFICATION**

(45) Date of publication and mention
of the grant of the patent:
**10.09.2003 Bulletin 2003/37**

(51) Int Cl.$^7$: **G06K 9/03**

(21) Application number: **96101846.2**

(22) Date of filing: **08.02.1996**

(54) **Apparatus and method for video coding**

Gerät und Verfahren zum Videokodieren

Appareil et méthode pour le codage vidéo

(84) Designated Contracting States:
**DE GB**

(30) Priority: **08.02.1995 JP 2064795**
**24.08.1995 JP 21631595**

(43) Date of publication of application:
**14.08.1996 Bulletin 1996/33**

(73) Proprietor: **KABUSHIKI KAISHA TOSHIBA**
**Kawasaki-shi, Kanagawa-ken 210-8572 (JP)**

(72) Inventors:
• **Hiramatsu, Ryosuke,**
**c/o Int. Prop. Div Toshiba Co.**
**Tokyo (JP)**
• **Yoneda, Hitoshi, c/o Int. Prop. Div. Toshiba Co.**
**Tokyo (JP)**

(74) Representative: **Zangs, Rainer E., Dipl.-Ing. et al**
**Hoffmann Eitle,**
**Patent- und Rechtsanwälte,**
**Arabellastrasse 4**
**81925 München (DE)**

(56) References cited:
**EP-A- 0 107 083**

**Description**

The present invention relates to apparatus and method for video coding. In particular, this invention relates to apparatus and method for video coding suitable for using in a mail processing system.

More particulary, the present invention relates to a video coding apparatus in a mail processing system for efficiently inputing an user code for a rejected mail by a reader in the apparatus with reference to the image of the address information on the rejected.

Furthermore, the present invention relates to apparatus and method for video coding of the user code of the rejected mail that can accurately and efficiently input the address information by reviewing the read address information and the unread address information which are displayed on the same screen so as to be distinguishable with each other with eliminating fatigues and stress for the user code input operation.

2. DISCUSSION OF THE BACKGROUND ART

Usually, a mail processing system includes an optical image/character reader for reading address information that are written on a designated area in the processed mail and converting the read address information into bar code information. The bar code information is printed on the mail for performing mail sort operation.

The sorted mail is carried to a designated delivery zone unit in the mail processing system.

For supporting and compensating the defects or limitations of mechanical faculty of the optical image/character reader, a video coding apparatus is used of inputting the user code for the mail for in case of the optical reader can not recognize the user code on the mail.

In a conventional apparatus and method for video coding, however, the operator feels stress and fatigues during the input operation of the user code. The operation must be done with a careful checking of the position of the read/unread address information among the displayed whole image of the rejected mail.

The operator must constantly recognize the input area for the user code and the column position for inputting the user code into the correct column position for the user code with watching the displayed whole image of the address information for the mail. Particularly, it makes feel fatigues to input a plurality of unread characters discontinuously exist in the user code.

The stress and fatigues during the input operation causes to invite the operator to make mistakes or errors the inputting the user address for the mail. Consequently, it deteriorates the efficiency and accuracy for the mail processing.

EP 0 107 083 discloses a video coding apparatus for a mail processing system reading and displaying an image of address information, including optical reading means, memory means and character recognizing means. Recognized and unrecognised information is displayed in different modalities. Further, a character classifier is provided and a correction circuit which marks characters which have not been recognized in a read station, represented by reject characters. An operator may subsequently key in appropriate characters into a data record displayed on a visual display unit, wherein a correction circuit includes a first bit pattern storage for bit patterns of all characters of a first data record which can be represented simultaneously on the first screen section and this first bit pattern store can be actuated by stored addresses, derived from the position of the reject characters contained in a first data record.

SUMMARY OF THE INVENTION

Accordingly, it is an object of the invention to provide apparatus and method for video coding suitable for a mail processing with improved recognition and correction operation The invention eliminates operator fatigues during the input operation and can achieve accurate input of unread information of the user code at the correct position in the user code just by watching the indication of the display.

It is further desirable to provide apparatus and method for video coding for inputting an use code for a rejected mail piece by displaying read or unread address information areas and candidate address area for the unread address information area on the same display for the whole image of the rejected mail.

It is further desirable to provide a video coding apparatus that can indicate type of input operation and input position for the user code information in a distinct form which can easily distinguish the read address information from the unread address information on the same screen. Consequently the operator needs not pay particular attention to find out the user code position on the display.

It is further desirable to provide a video coding apparatus for a mail processing system that can improve the accuracy and efficiency for the input operation of the user code with reducing the fatigues during the input operation.

According to the present invention, there is provided a video coding apparatus suitable for mail processing that can efficiently input the unread user address information for rejected mail with eliminating fatigues during the operation.

This object of the invention is solved by a video coding apparatus with the features of claim 1 and a method with the features of claim 14.

A video coding apparatus comprises means for reading and inputting a whole image of an address information on a mail, recognized address information, unread address information and candidate information for the unrecognized address information to a memory means in case of the reading fails to recognize an user code from the address information on the mail, the memory means for storing these information, means for displaying the whole image of the rejected mail accompanied by the recognized address information and the unread address information, with a distinct indication for distinguishing the unread address information from the recognized address information on the same screen display, and means for inputting correct address information for the unread address information as distinctly indicated in the display.

A video coding apparatus according to the invention advantageously comprises means for reading and inputting a whole image of the address information on the rejected mail, a first block area information for the recognized user code, a second block area information for the unread user code and a plurality of third block information as candidate areas for the user code in case a partial portion of the user code can be recognized to a memory means, means for displaying the whole image of the rejected mail accompanied by the plurality of dedicate block areas for the user code in different ways in accordance with a support indication.

The video coding apparatus according to the invention is advantageously characterized in that the input means inputs a recognized block area information as a candidate block area information by using detecting cut block areas from the mail address with comparing a respective distance between the nearest or farthest point among the four corner points of the recognized block area information to a stamp on the mail and the center points of another detecting cut block area.

The apparatus according to the invention is advantageously further characterized in that the input means inputs an overlapped detecting cut area as a candidate block area in case of that a difference area of the recognized area overlaps to another detecting cut area and the recognized block area does not coincide to the final recognized block area; and the candidate block area is displayed as the unread block area.

The apparatus according to the invention is advantageously characterized in that the display means displays the support information in a different way for the corresponding support information.

A method for video coding for inputting an user code for a mail processing by reviewing a display for a whole image of address information for the mail comprises the steps of reading the address information on a mail; storing a whole image of the address information on the rejected mail accompanied by candidate block area information for the user code in case the user code is partially recognized, a recognized block area information for indicating possible location of the address information and support display information for designating a support position with comparing the candidate block area information to the recognized block area information in case the reader can not read the mail address information and rejected; displaying the whole image of the address information of the rejected mail accompanied by a plurality of dedicate area information in a different way in accordance with the support display information.

Other objects, features and advantages of the present invention will become apparent from the following detailed description when read in conjunction with the drawings and appended claims.

BRIEF EXPLANATION OF THE DRAWINGS

For a better understanding of the present invention reference may be had to the accompanying drawings, wherein

Figure 1 is a block diagram schematically showing the arrangement of a video coding apparatus according to one preferable embodiment of the present invention;

Figure 2 depicts a memory map stored in a specific area of the first memory as shown in Figure 1;

Figure 3 is a block diagram for showing a construction of an optical reader;

Figure 4 is a block diagram schematically showing the arrangement of a mail processing system to which the video coding apparatus according to the present invention is applied;

Figure 5 is a plain view showing an example of a post card which includes the handwritten mailing address code and the handwritten addressee name;

Figure 6 illustrates a plain view showing an example of a post card that are printed both the mailing address code and the addressee name;

Figure 7 shows an example of the screen display for the printed post card in the form of the lateral writing in a portrait orientation;

Figure 8 is another example of the screen display for the printed post card in the form of the lateral writing in a portrait orientation;

Figures 9A to 9C show examples of the displayed instruction on the screen in Figures 7 and 8;

Figure 10 is a table for explaining methods for controlling the display on the basis of the recognition result by the optical reader in the system;

Figure 11 is a table for explaining a method for displaying the recognition results in the new mailing code input area of the display with respect to the pattern for the unread four lower columns of the new mailing code;

Figure 12 is a table for explaining methods for displaying the recognition results for upper 3 columns of a zip code on the user code input area of the display with respect to the pattern for the unread columns;

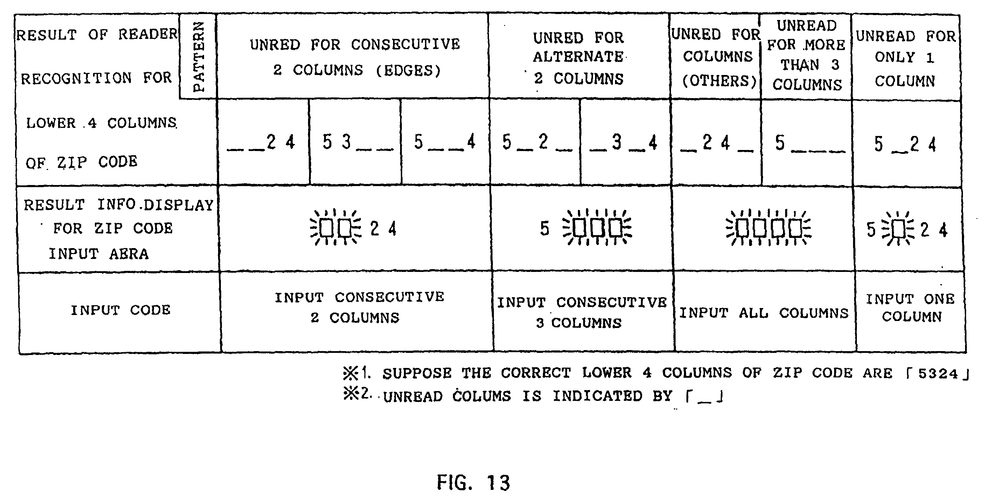

Figure 13 is a table for explaining another method for displaying the recognition results for the lower 4 columns of a zip code on the user cose input area of the display with respect to the pattern for the unreadable columns;

Figures 14 to 18 are flow charts for explaining the overall operation of the video coding apparatus;

Figures 19 and 20 are flow chart for explaining the display processing in the zip code code input area;

Figure 21 shows a display screen for a handwritten post card in the lateral writing form;

Figure 22 depicts another embodiment of the memory map stored in a specific area of the first memory as shown in Figure 1;

Figure 23 is a plain view showing another example of a post card which includes the handwritten mailing address code and the handwritten addressee name;

Figure 24 illustrates a plain view showing another example of a post card that are printed both the zip code and the addressee code;

Figures 25A to 25C are explaining methods for searching a detecting cut block area information of a clipped block information obtained from the written address inforamtion on a post card;

Figures 26A to 26C explaining methods for searching a detecting cut block area information of a clipped block information obtained from the written address inforamtion on an envelope mail;

Figures 27 and 28 show examples of the display screen of the printed post card in a lateral form with indication the particular notation;

Figures 29 and 30 show the recognition result for the mail as shown in Figures 27, 28. In Figures, a hatched block W1 indicates a recognized block area information and an unhatched block W2 indicates a detecting cut block area.

Figure 31 is an example of the display screen of the handwritten address information on an envelope mail in the vertical form; and

Figure 32 is a recognition result for the mail as shown in Figure 31.

These drawings are not intended as a definition of the invention but are provided solely for the purpose of illustrating the preferred embodiments of the invention described below.

DETAILED EXPLANATION OF THE PREFERRED EMBODIMENTS

To provide a basis for a discussion of the apparatus of the present invention, it will be useful to begin with a brief discussion of a video coding apparatus.

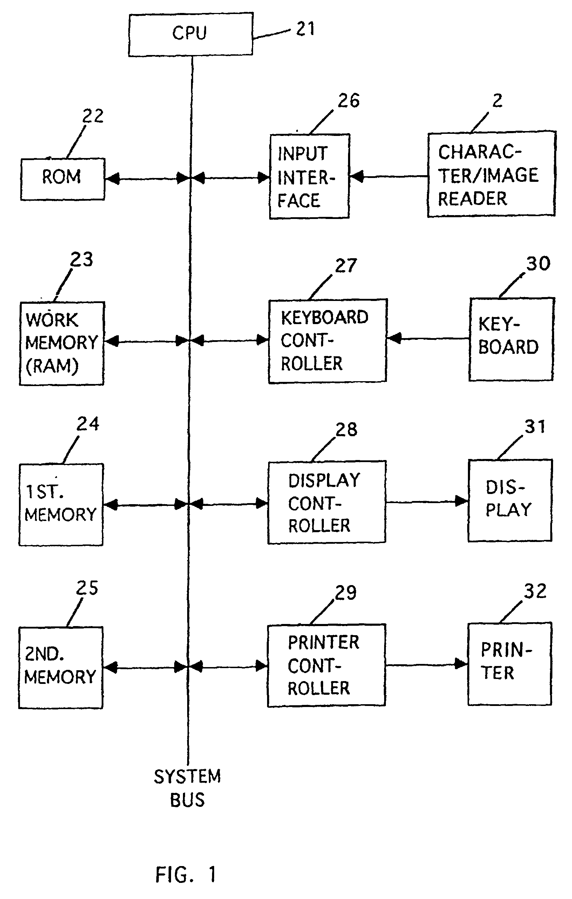

Figure 1, which schematically illustrates the arrangement of a video coding apparatus, has been presented for this purpose. As shown in Figure 1, the video coding apparatus includes a central processing unit ( hereinafter referred to as "CPU" ) 21 for controlling the overall operation of the apparatus. A read only memory ( hereinafter referred to as "ROM" ) 22, a working memory of random access memory (hereinafter referred to as "RAM" ) 23, a first and second memory means 24 and 25, an input interface 26, a keyboard controller 27, a display controller 28 and a printer controller 29 are coupled to the CPU 21 through a system bus 33.

A character/image reader is coupled to the input interface 26. A keyboard 30 as an input means is coupled to the keyboard controller. A display device 31 as a display means such as a cathode ray tube is coupled to the display controller 28. Further, a printer 32 is coupled to the printer controller.

The first memory 24 is provided to store image data temporary in a specific area. A semiconductor memory, such as a random access memory (RAM) or an electrically erasable and programmable read only memory (EEPROM), is used for the first memory 24.

A large capacity hard disk is used as the second memory 25 for storing many kind of information as to the mail processing, e.g., whole images of a mail surface which are obtained through the reader 2, user codes input by the keyboard 30, an address database for checking the input user code, and the like.

The input interface 26 is constructed by a small computer system interface (SCSI). When the reader 2 can not recognize the user code written on a mail, the reader 2 provides whole images on the mail surface to the second memory 25 through the input interface 26. The reader 2 further provides the following information as a result of the discrimination of the mail reading. The discrimination information include information as to readable/unreadable column number and unreadable column area, area information for candidate address, attribute information of the mail, such as, classifying whether a postcard or another mail, classifying whether a handwritten address or a printed address and detected direction of thecharacter line, candidate character information for the user code, i.e., zip code and address code, the coordinate location information as to a specific zip code and information for user code candidate area.

The display 31 serves to display the whole images of the mail, the candidate information for the mail, the coordinate location information and user code candidate area information from the reader 2 as explained above.

An operator uses the keyboard 30 for inputting correct information for the mail with referring to the information displayed on the display device.

The processing contents in the video coding apparatus and an evaluation table are printed out by the printer 32 through the printer controller 29.

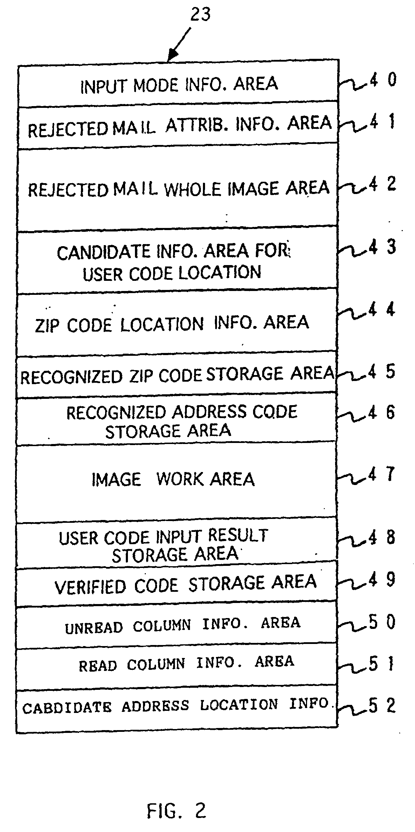

Figure 2 explains the contents of the memory map stored in the first memory 24. Input mode information for setting an input operation is written in the first information area 40. The input mode information includes level setting for an operator and layout changing for a displayed image which are necessary for customizing the apparatus.

The attribute information of the mail which can not be recognized by the reader 2 is written in the second information area 41. As explained above, the attribute information includes classification of postcard/others, classification of handwritten addresses/printed addresses, a detected direction of the character, and so on.

Whole images for a surface of the mail rejected by the reader are written in the third information area 42 of the first memory 24.

With respect to the rejected mail which is not readable, the reader 2 provides a candidate information of the rejected mail for suggesting the highest possible area for the location of the written user code. The candidate information for the user code location is written in the fourth information area 43.

A coordinate information suggesting a possible area for designating a location of the zip code on the surface of the rejected mail is written in the fifth information area 44.

The sixth and seventh information areas 45 and 46 store the recognized zip code and the address code by the reader, respectively.

The eighth area 47 in the memory is used as an image work area. This area is used by the operator for a high speed image operation. The operator performs image operations, such as rotation, reduction, enlargement, or scrolling of the images of the rejected mail while reviewing the whole images displayed on the display device.

The operator inputs a recognized user code through the keyboard while watching the screen display of the whole images of the rejected mail or the display of the location of the zip code for the mail. The input user code is written in the ninth information area 48.

The input user code through the keyboard is collated with the address data base stored in the second memory 25. The collated result of the user code is stored in the tenth information area 49.

The information as to the read/unread column area from the reader is respectively written in the eleventh and twelfth information areas 50 and 51. Finally, the candidate address area information from the reader is stored in the thirteenth information area 52.

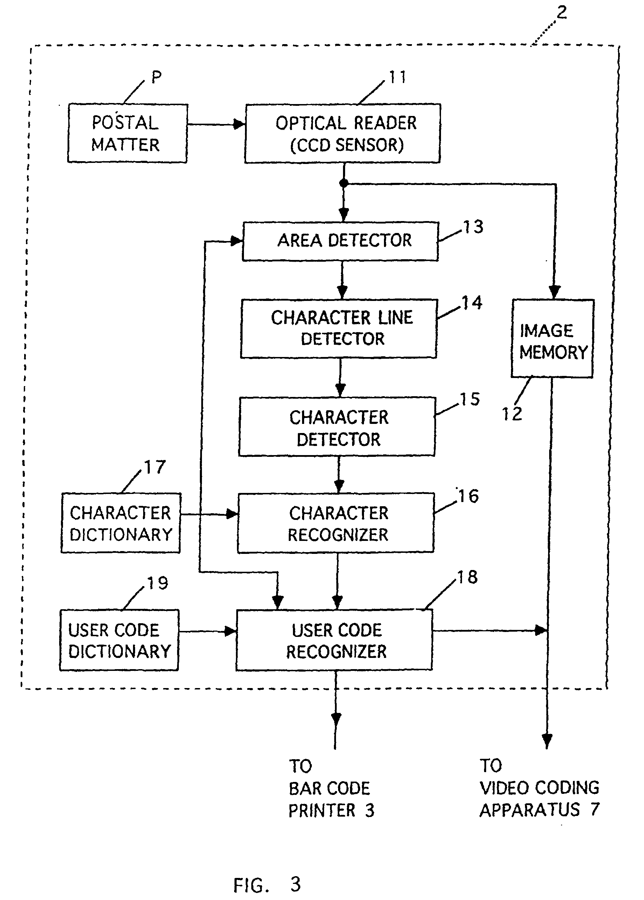

Figure 3 shows the arrangement of the reader 2 in Fig. 1. A photoelectric converter 11 irradiates light from a light source onto a mail (postal matter P) delivered from a mail supplier for converting the reflected light into an electrical signal by using a line sensor of charge coupled device (CCD). The photoelectric converter provides the information of the whole images of the mail surface as digital signals.

The whole image information of the mail P read by the photoelectric converter 11 is temporarily stored in an image memory 12. Further the whole image information is supplied to an area detector 13 for detecting a zip code designating area and an address information area for the addressee from the whole images.

A character line detector 13 receives the output signals from the area detector 13 for detecting character lines in the detected area. For example, it detects the character lines by obtaining a projected pattern in a horizontal direction.

The output signals from the character line detector 14 are supplied to a character detector 15 for detecting characters one by one from the detected character lines by obtaining a projection pattern in a vertical direction.

The output signals from the character detector 15 are supplied to a character recognizer 16. The character recognizer 16 performs character recognition process for the detected characters with reference to a character dictionary 17.

The recognition results obtained in the character recognizer 16 are supplied to an user code recognizer 18. The user code recognizer 18 performs a recognition process for identifying the user code with reference to an user code dictionary 19. When a specific user code is recognized in the recognition process, the specified user code is supplied to a code printer 3 for printing the bar code information of the user code on the mail.

If the user code can not be specified in the user code recognizer 18, a retry command from the user code recognizer is supplied to the area detector 13 for restarting the recognition processing by detecting the user code area by elimination to detect the zip code area.

When the user code cannot be recognized even with the retry processing, the user code recognizer 18 delivers a reject signal to the video coding apparatus 7.

Further, the user code recognizer 18 delivers the following information to the video coding apparatus 7 as the result information for the recognition process. The result information is unreadable column number, candidate character for the user code, attribute information as to the mail, such as classification of postcard/others, classification of handwritten address/printed address, and the detected direction of the character line, the coordinate information as to the detected zip code designating area and as to the user code area other than the zip code, i.e., possible locations for the user code. The result information further include as to the information for readable/unreadable column area and for candidate area for the location of the addressee.

The zip code designating area is used for classifying the mail as handwritten or printed. For example, if a zip code is written in the in the zip code designating area, the mail is determined as a handwritten character mail. Otherwise, the mail is determined as a printed character mail.

Meanwhile, regardless of whether or not the user code can be recognized, the user code recognizer 18 delivers a print instruction signal to the bar code printer for printing ID number for the mail.

If the user code is not recognized by the user code recognizer 18, the whole images of the mail surface stored in the image memory 12 are delivered to the video coding apparatus 7.

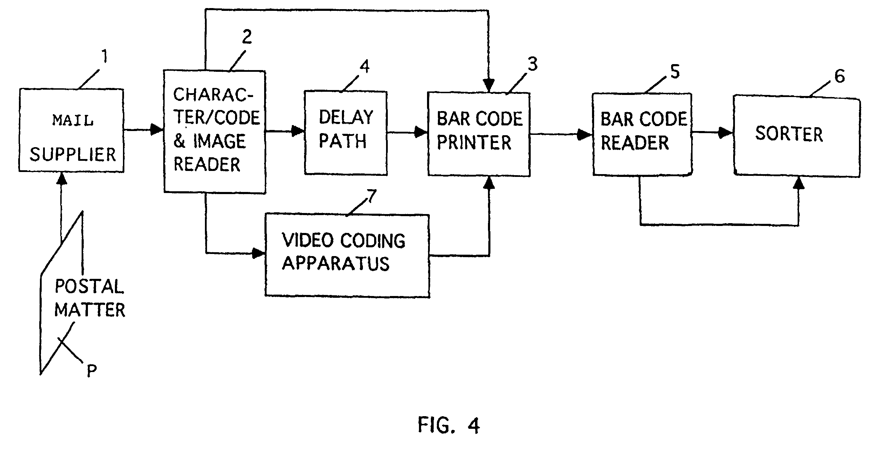

Figure 4 shows a schematic arrangement of the mail processing system to which the video coding apparatus of the invention as depicted in Figure 3 is applied. A large number of the mails for processing are stacked in a mail supplier 1 for delivering the mail one by one to a character/code and image reader 2.

The reader 2 recognizes the written user code on the supplied mail by reading the whole images on the surface of the mail. If the user code is recognized in the reader 2, the recognized code information is supplied to a bar code printer 3 for printing the code information as a bar code on the mail. At this time, as explained before, the reader 2 outputs a serial identification (ID) number to the bar code printer for the respective mails which are supplied to the reader 2 regardless of whether the respective user code is properly recognized or not.

The user code recognized mail at the reader 2 is carried to the bar code printer 3 through a long conveyer which constitutes a delay path 4. The bar code printer 3 prints the converted bar code information of the recognized user code on the mail with checking the respective ID number so as to link to the recognizes mails.

After printing the converted bar code, the printed mail is carried to a bar code reader 5. The bar code reader decodes the printed bar code on the mail. The decoding result, i.e., the user code, is supplied to a sorter means 6, accompanying the mail. Then the sorter carries the mail to a specific delivery zone unit as designated by the bar code.

If the user code on the mail can not be recognized by the reader 2, the whole image of the mail surface, the ID number for the mail, the attribute information of the mail, such as classifications of postcard/others and handwritten/printed address and the direction of the character line and candidate area information as to the user code location are supplied to a video coding apparatus 7 from the reader 2. Further, the reader 2 delivers a reject signal for the mail to the bar code printer 3.

The whole image of the rejected mail is displayed on a display screen in the video coding apparatus 7 in order to perform manual operation for insertion or correction of the user code. With visually checking the image on the display, an operator inputs or corrects the user code of the rejected mail by using an input means, such as a keyboard device or a mouse device. After verifying the accuracy, the input user code is supplied to the bar code printer 3.

The rejected mail is conveyed to the bar code printer 3 through the delay path 4 at a certain time delay for the manual input operation at the video coding apparatus 7.

The bar code printer 3 prints converts the verified user code from the video coding apparatus 7 into bar code information. The printer 3 prints the concerted bar code on the corresponding mail with reference to the reject signal and the ID number for the mail which were previously supplied from the reader 2.

Subsequent operations after printing the bar code on the rejected mail are the same as the case wherein the user code can correctly read from the mail at the reader, as mentioned before.

An embodiment of the present invention will be explained in further detail with reference to the accompanying drawings.

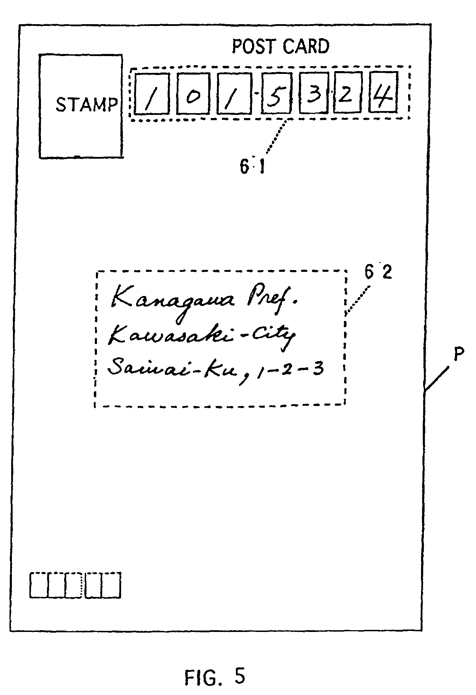

Figure 5 shows an example of a handwritten postcard which includes an advanced zip code area 61 and an address code area 62 as designated by dotted red lines. The advanced zip code consists of, e.g., seven digits for designating a more detail division of the addressed city than the conventional. In the address code area 62, address information including address code number and addressee were written in hand. These zip code and address code number are used as an user code.

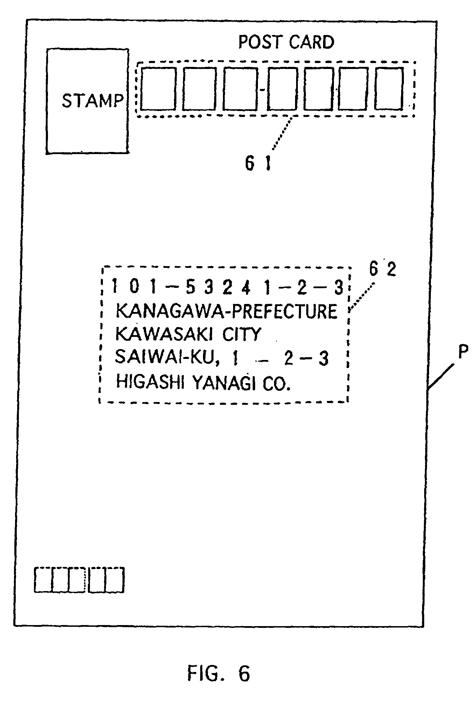

Figure 6 shows an example of a printed postcard in which both of the advanced zip code and the address information were printed in the address code area 62. As shown in this Figure 6, in a case of the address information is printed, it is usual to denote the printed zip code in the address code area 62, in stead of denoting it in the designated zip code area 61.

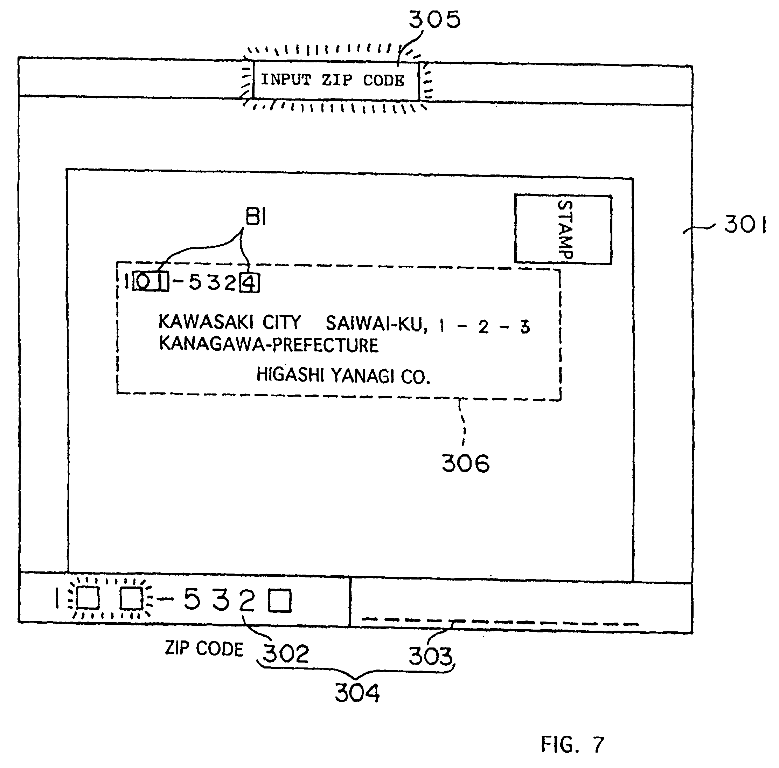

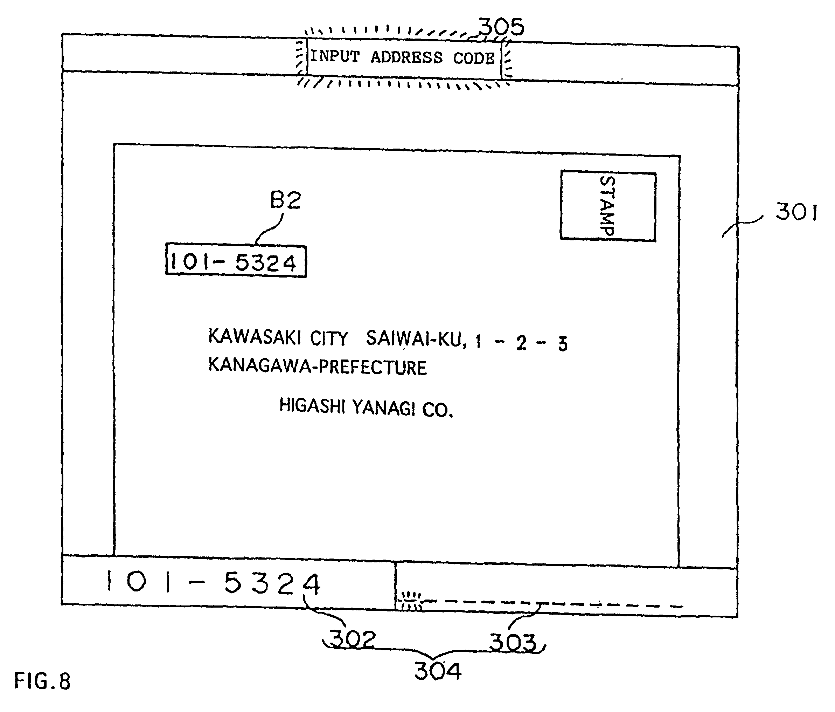

Figures 7 and 8 show an operational screen display of the display device in the video coding apparatus, respectively. The operational screen includes a whole image display area 301, a zip code input area 302, an address code input area 303 and an operation indicator 305 at the upper portion of the display.

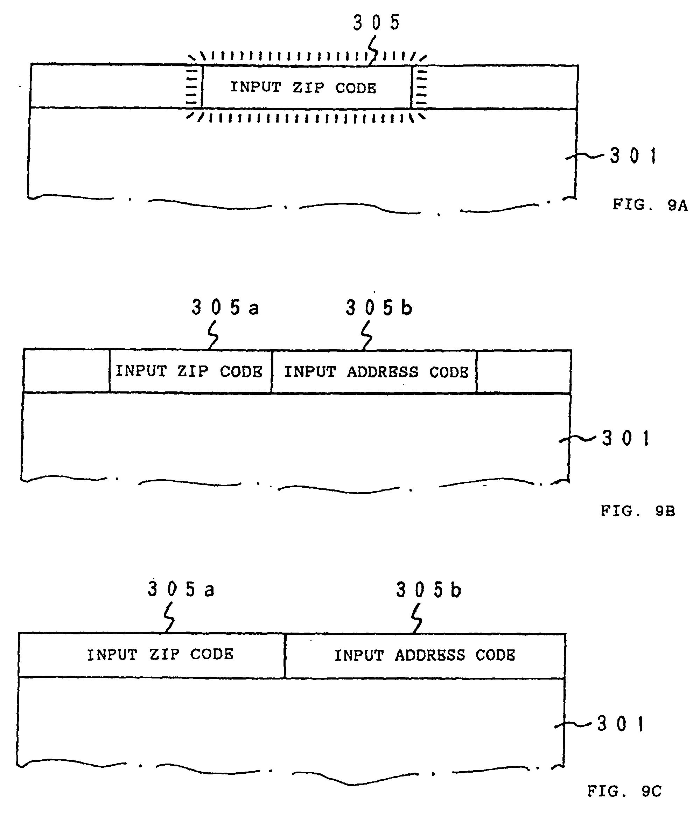

As explained before, the zip code 302 and the address code 303 constitute the user code 304 for the mail as depicted in Figures 8 and 9.

In case of that address information for the mail are written in a printed form, it is usually written in a lateral direction to the long axis of the mail since the lateral direction can include a large number of characters in the same line.

Accordingly, when the user code recognizer in the optical reader detects that the direction of the character line is "pa rallel" to the long axis of the mail, the whole image of the mail is displayed in the whole image area 301 without any image processing, i.e., rotation, enlargement or scrolling, by the operator as shown in Figure 7.

If the direction of the character line is detected as "perpendicular" to the long axis of the mail, the whole image of the mail is displayed in the whole image area 301 after making an image processing of 90 degree of rotation.

On the other hand, in case of the written address mail, the character lines of the address information are usually perpendicular to the long axis of the of mail.

The following table explains the necessity for the image processing of rotation.

### Table 1

| Result of recognition | Direction of the character line to the long axis of the mail | |
|---|---|---|
| Type of written address | Parallel | Perpendicular |
| Printed | No rotation | clockwise 90° rotation |
| Handwritten | No rotation | No rotation |

When the image is displayed under the image processing of rotation after the recognition of the character line of the address information, it is possible to change the magnification of the displayed image. In this embodiment, in case of the image processing of "no rotation" , the displayed image is performed the image size reduction of 50 %. And the image is displayed in 70 % reduction, if the image is performed a "rotation" .

Further, in case of the printed address mail, the lower end of the displayed whole image of the mail is aligned with the lower reference line of the screen of the display. And for the handwritten address mail, the upper end of the displayed whole image is aligned with the upper reference line of the screen of the display.

When the display image is enlarged, it is possible to display the enlarged central portion of the mail image at the center of the display screen. It is further possible to display the enlarged central portion only of the handwritten mail image with eliminating the postage stamp and zip code designating areas at the center of the display screen.

Further, if the total width of the postage stamp and zip code designating areas is almost equal to the width of the mal, it can be initially eliminated from the displayed image. Of cause, if necessary, it can make some image processing, such as rotation, enlargement, reduction or scrolling.

Furthermore, it is possible to display a designation frame for indicating a candidate area of the written address for the mail with superimposing on the displayed whole image.

As shown in Figure 8, the user code input area 304 is divided into two input areas. That is, one is a zip code area 302 and the other is an address code input area 303. These areas are displayed in a different color so as to the operator can recognize each of them quickly.

The zip code input area 302 controls to display the candidate characters for the unread zip code. If the reader can not read characters in some of the designated columns for the zip code, the reader provides some possible candidate characters for the unread columns of the zip code.

When the reader can not read only one column character among the zip code, the operator inputs the one character in the corresponding unread column of the zip code. In case of that the reader can not be recognized two characters in consecutive columns at the either end of the zip code block, the operator inputs the two consecutive characters. In other cases, the operator input all characters for the zip code.

If the reader can not read more than five consecutive characters in the zip code, all characters for the zip code are input by a manual operation. The following equations are general explanation for the input method of the unread zip code.

$$n - m > 2 \qquad \cdots \text{Input only for the consecutive m columns.}$$

$$n - m = 1 \qquad \cdots \text{Input all columns.}$$

where

n: number of columns for the user code
m: number of consecutive unread columns

Figures 8 and 9, the input indicator 305 is provided at the upper portion of the whole image area 301. It is possible to blink the indicator 305 with corresponding to the indicated content of the displayed image.

It is further possible to indicate the indicator 305 in a particular color or a particular colored characters or the combination of them. Figures 9A to 9C show the example of the indicator 305 of the screen display. Figure 9A shows one indicator 305 for the character indication of "INPUT ZIP CODE" or "INPUT ADDRESS CODE" . In Figures 9B and 9C, the indicator 305 comprises of two dedicated indication parts 305a and 305b for the character indications of "INPUT ZIP CODE" and "INPUT ADDRESS CODE" , respectively. Figure 9C shows a larger indicator for the dedicated indication parts 305a and 305b in a full width of the display area 301.

The display 301 including the indicator 305 is controlled so as to represent the indication as explained as the followings under the result of the recognition by the character/image reader 2 in Figure 1.

(1) When the reader can not recognize all columns for both of the zip code and the address code, and further no address location information is supplied in the candidate address area location information, a candidate address area information is represented in the whole display area 301 by a rectangular flame of yellow color. Further, the indicator 305 turns on or blinks with a red color.

(2) When the reader can read some of columns for the zip code and can not recognize all columns for the address code, and further no address location information is supplied in the candidate address location information, a candidate address area information of a yellow colored frame and the read columns information of zip code by a red colored frame are represented in the whole display area 301. Further, the indicator 305 turns on or blinks with a red color.

(3) When the reader can read all of columns for the zip code but can not recognize all columns for the address code, and further no address location information is supplied in the candidate address location information, the read columns information of zip code by a green colored frame is represented in the whole display area 301. Further, the indicator 305 turns on or blinks with a green color.

In this case, it is possible to display only the last column or block of the recognized zip code on the screen 301.

(4) When the reader can read all of columns for the zip code but can not recognize all columns for the address code, and further an address location information is supplied in the candidate address location information, the candidate address location information is represented in the whole display area 301 by a green colored flame. Further, the indicator 305 turns on or blinks with a green color.

(5) When the reader can read all of columns for the zip code but can recognize partial columns for the address code, and further an address location information is supplied in the candidate address location information, the read columns information of address code by a green colored frame and the address location information by a green colored frame are represented in the whole display area 301. Further, the indicator 305 turns on or blinks with a green color.
In this case, it is possible to display only the last column or block of the recognized zip code on the screen 301.

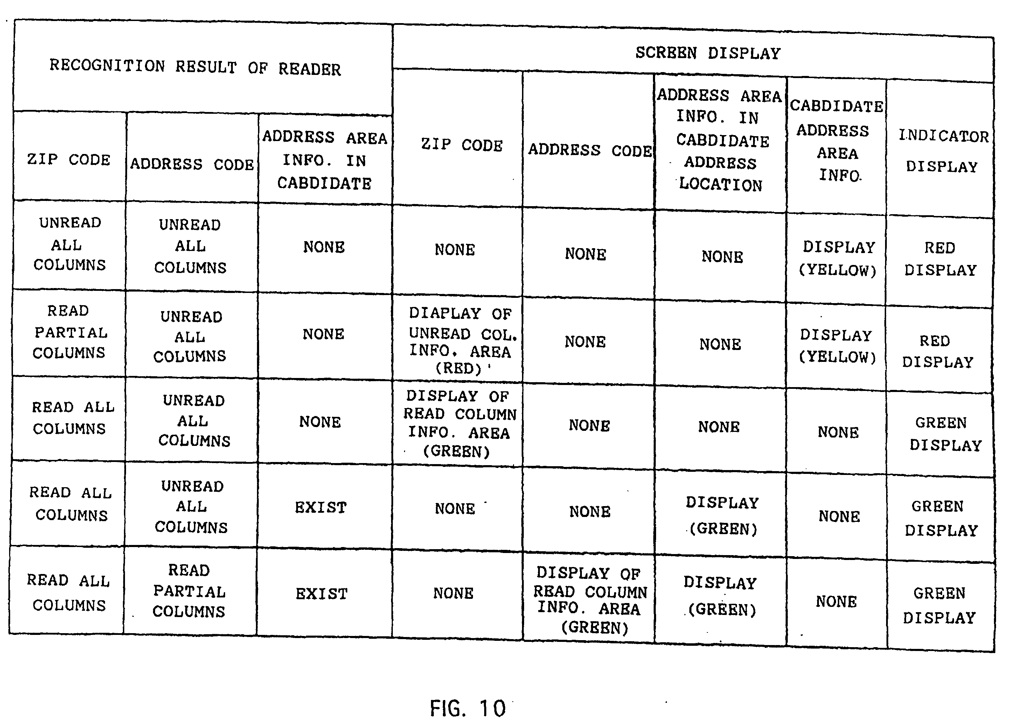

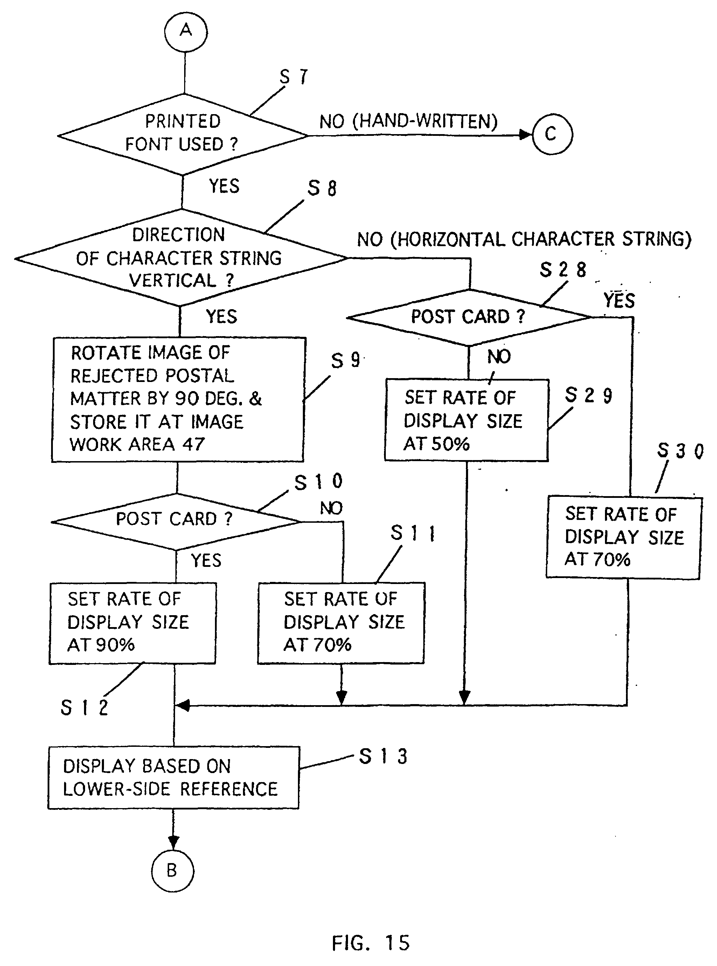

Figure 10 explains these methods for controlling the display contents. As explained above the operator can recognize the input operation starting position of the user code by watching the color of the indicator 305 and the colored frame in the screen.

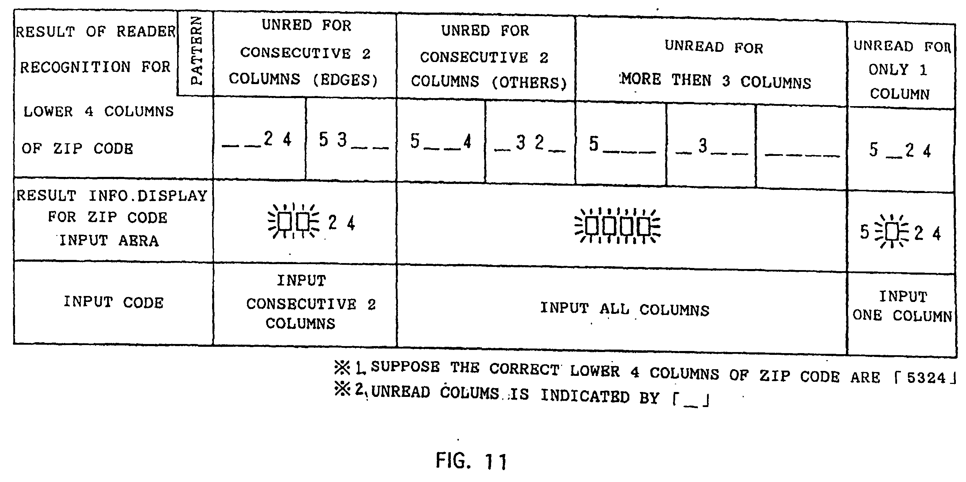

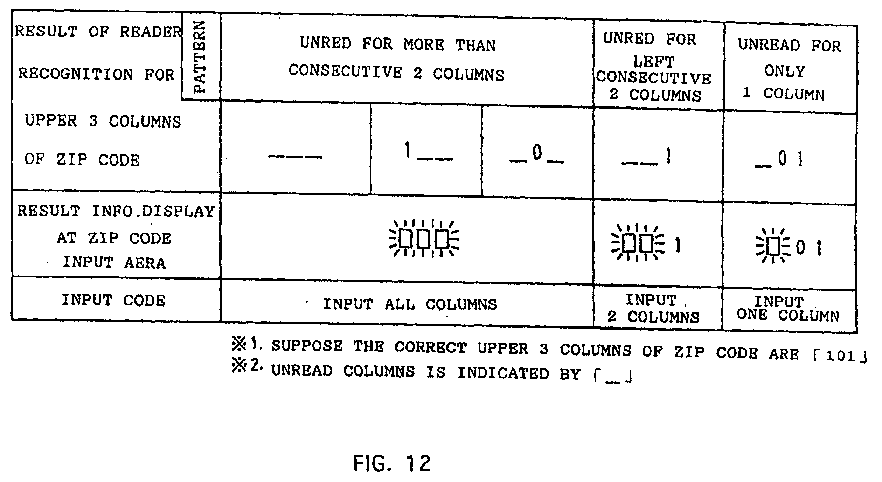

Figure 11 explains the control method for an input operation for the lower 4 columns of the zip code. And Figure 12 SHOWS the control method for an input operation for the UPPER 3 columns of the zip code.
As shown in Figure 11, if the result of the reader recognition for the lower 4 columns of the zip code shows that the two consecutive edge columns can not read, the unread two columns are blinking in the zip code area in the display screen 301. Then, the operator input the blinked two consecutive columns.
If the result of the reader recognition for the lower 4 columns of the zip code shows that another two columns except the two consecutive edge columns in the lower 4 columns of the zip code or the columns of more than 3 can not read, all four columns of the zip code are blinking in the display screen 301. Then the operator input all columns for the zip code. If the only one column can not read, the corresponding column is blinking for an input operation.
With respect to the upper three columns of the zip code, as shown in Figure 12, if the reader can not recognize all columns or more than two columns excepting the two consecutive left edge columns, all three columns are blinked for indicating the column input operation. If the two consecutive left edge columns or the only one column can not read, the corresponding columns only are indicated by blinking.
In case of the input operation for all columns, if the input column information differs from the result of the reader recognition, the input information is neglected so as to correct the input information by the recognized result of the reader.
If the operator find out a mistake recognition of the zip code which displayed at the zip code area 302 in the display 3.01 in Figure 3 during the input operation, it is possible to change to the all columns input operation mode by using the keyboard 30 as shown in Figure 1. In this case, the display of the recognized characters are cancelled and all columns are blinking for the input operation.

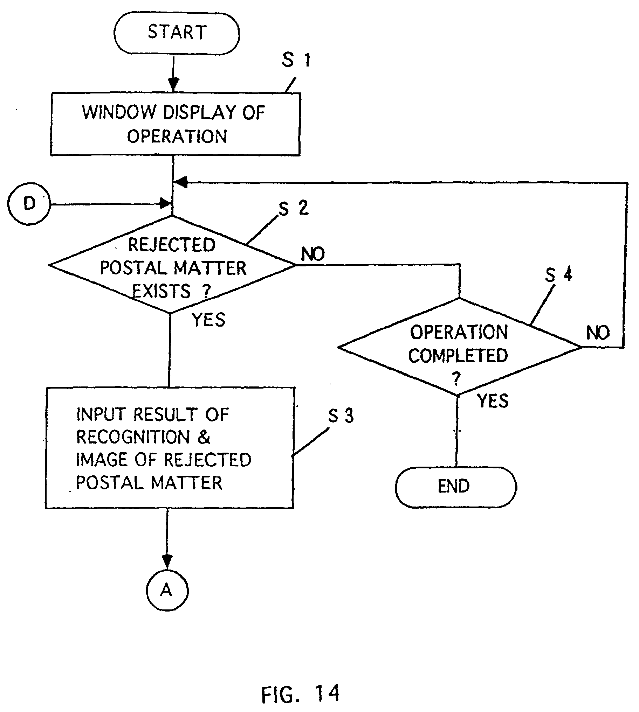

Figures 14 to 18 are flow charts for explaining an example handling of the operation mail. For example, as shown in Figure 7. the mail is an envelope mail in which the address code is written in a printed form in a direction of the major axis of the envelope but the zip code does not written in the designated zip code area.
As displayed in the screen, the rejected envelope mail has an user code of a zip code "101-5324" and an address code "1-2-3" . The result of the reader recognition is displayed at the lower code areas in the screen. That is, for example, the result of the reader recognition is "1_ _ -532_ , _ _ _ _ _".
When the apparatus started, the flow advances to the step S1 to display the operation mode on the screen. If the rejected mail for processing exists, the process advances to the next S3 step for a first input operation of the result of the recognition. If there is no rejected mail, the process goes to the step S4 and ends the operation or waits the operation until the next processing mail comes.
At the step S3, the attribute information for the rejected mail, the whole image of the rejected mail, the candidate user code information of the zip code and the address code, the coordinate zip code information are respectively written in the corresponding memory areas 41, 42, 43 and 44 in the first memory 23 as shown in Figure 2. Further, the recognized zip code and address code, unread and read columns information of the user code and candidate address location information are written the respective memory areas 45, 46, and 50-52, respectively.
When these information are written in the first memory 24 in Figure 1 at the step S2, the process goes to the steps as shown in Figure 15. At the step S7, The attribute information of the mail, i.e., classification of a printed or a handwritten mail is determined.
Since the mail is a printed one in this example case, the process goes to the step S8 for checking the direction of the character line of the mail address. The example mail has a vertical character line to the short axis of the mail envelope. Consequently, the process goes to the next step S9 for rotating the direction of the character line for the address information on the mail so as to display the address information in parallel to the wide direction of the display. At the step S9, the whole image of the rejected mail stored in the image area 42 in the first memory 23 in Figure 2 is rotated by 90 degrees in a clockwise direction.

The process goes to the step S10 for checking whether or not the rejected mail is a past card. Since the example uses an envelope mail, the process goes to the step S11.

In the apparatus, the magnification of the display can be changed in accordance with the rotation of the image. For example, 90 % sized image of a post card and 70 % sized image of an envelope are set for a respective display. The whole image of the mail is displayed on the screen with based on the lower reference of the image display area at the step S13.

As shown in Figure 7, the user code 304 is displayed along the lower reference of the display by reading the contents in the recognized zip code storage area 45 and the recognized address code storage area 46 in the first memory 23 as shown in Figure 2. In this example, as explained above, the user code display of "1_ _-532_ , _ _ _ _ _" is indicated along the lower reference of the image. That is, the unread columns are blinking with a colored frame line. As shown in Figure 7, the second and third columns for the upper three columns of the zip code 302 and all columns for the address code are displayed in red colored frames with blinking them.

By reading out the unread column information area 50 in the first memory 23 in Figure 2, the zip code of seven columns is displayed in the address candidate area 306 as shown in Figure 7. The address candidate area 306 is displayed with a ye;;ow colored frame. And the unread columns for the zip code are displayed with a blinked red colored frame.

Further, the indicator 305 provided along the upper reference of the display is blinking with a same red color of the blinking display for the unread columns for the zip code. It is also possible to display the contents of the indicator 305 by characters such as "INPUT ZIP CODE".

In case of the all columns for the zip code are recognized, with reading out the read column information area 51 in the first memory in Figure 2, the zip code is displayed with a green colored frame B2 on the whole display 301 of the mail as shown in Figure 8.

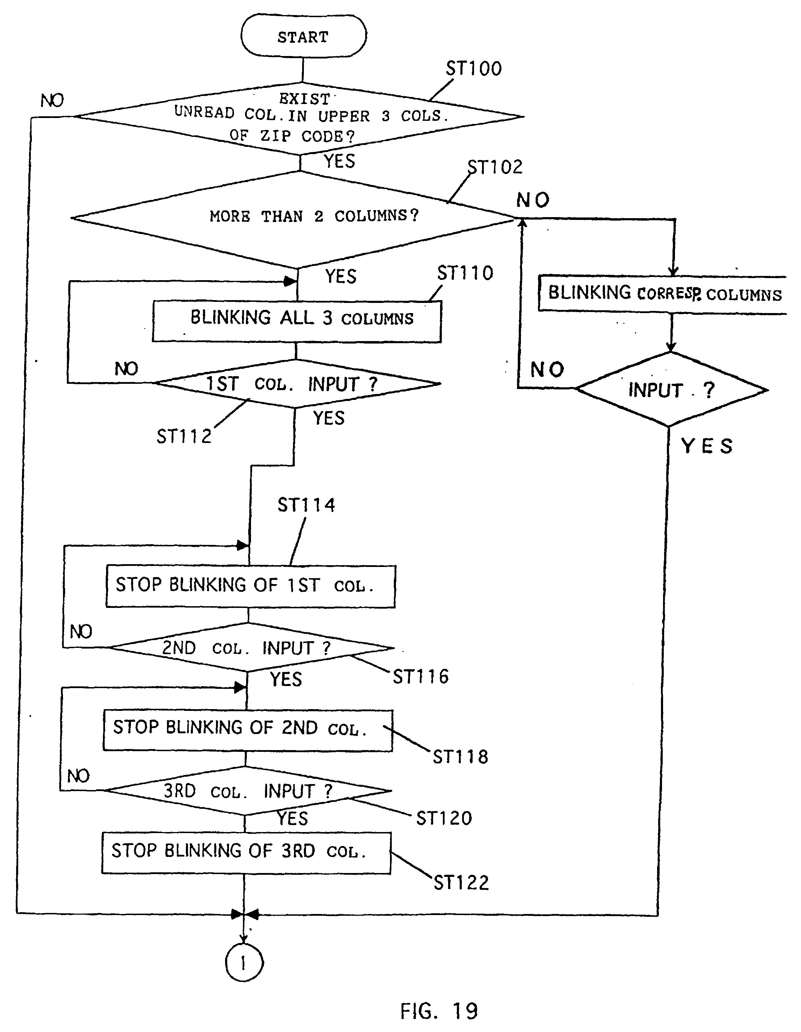

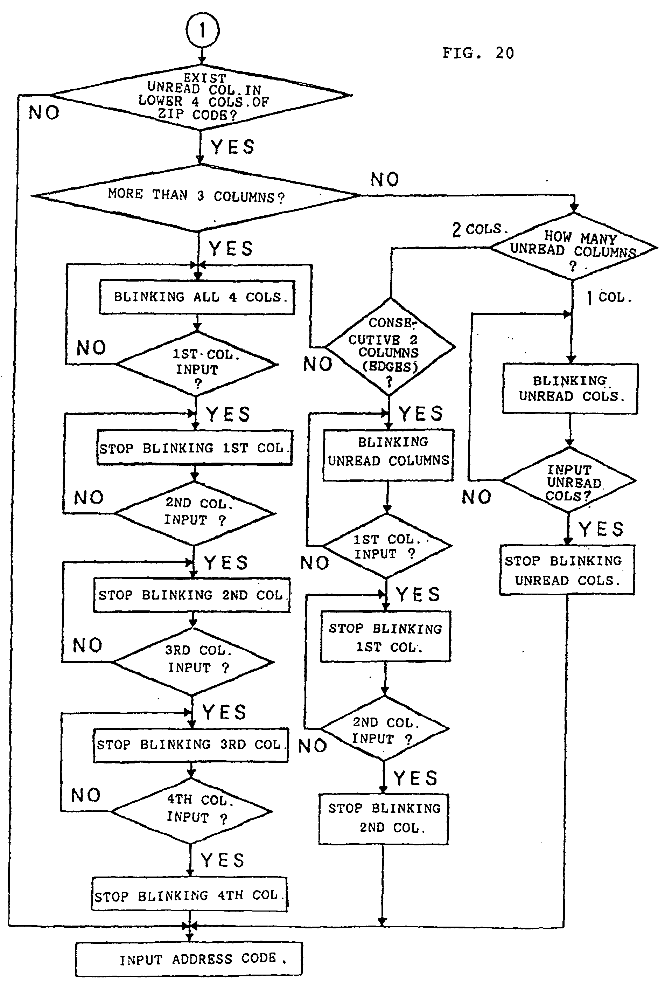

Figures 19 and 20 explains the process for the display operation of the zip code. The first operation step ST100 checked the existence of the unread columns in the upper three columns of the zip code. If so, the next step ST102 examines whether the unread column for upper three columns of the zip code exists more than 2. If not, the display of the zip code is controlled so as to blink the corresponding columns. The blinking of the column is stopped when the character in the column is input.

If the unread column for upper three columns of the zip code exists more than 2, the all three upper columns of the zip code are displayed with blinking columns. The blinking is stopped with finishing of the input operation for the respective column with one by one as depicted the steps ST114, ST118 and ST122.

Figure 20 explains the display and input operation for the lower 4 columns of the zip code. Since the operation for the lower 4 columns is basically similar to the operation for the upper three columns of the zip code, the detail explanation is omitted for avoiding the repetition of explanation.

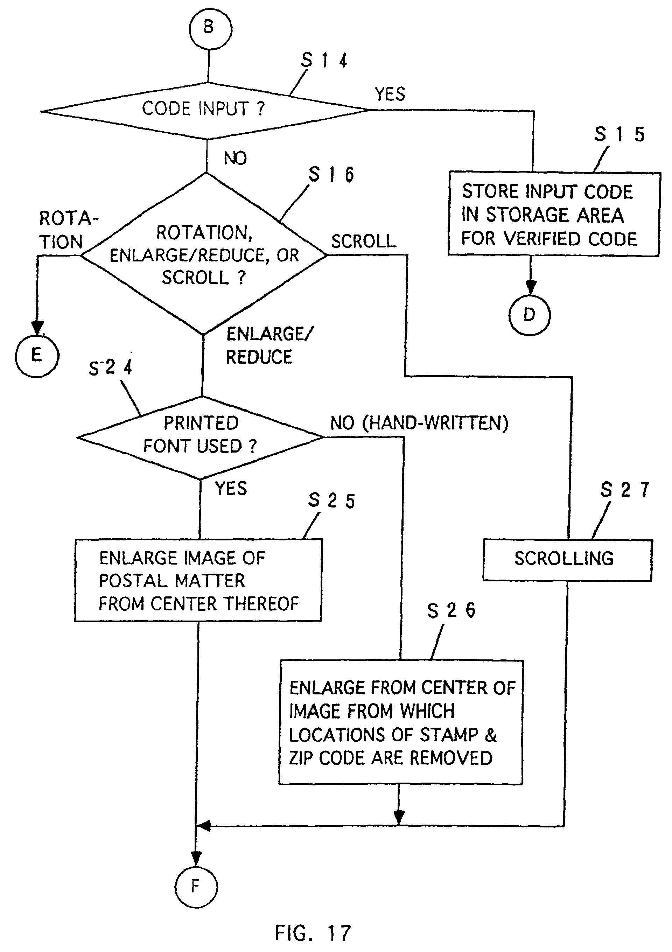

Now turning back the operation as shown in Figure 17, the operator inputs the recognized user code with checking the contents of the initial screen display for the mail. If the input operation finishes, the process goes to the next step S15.

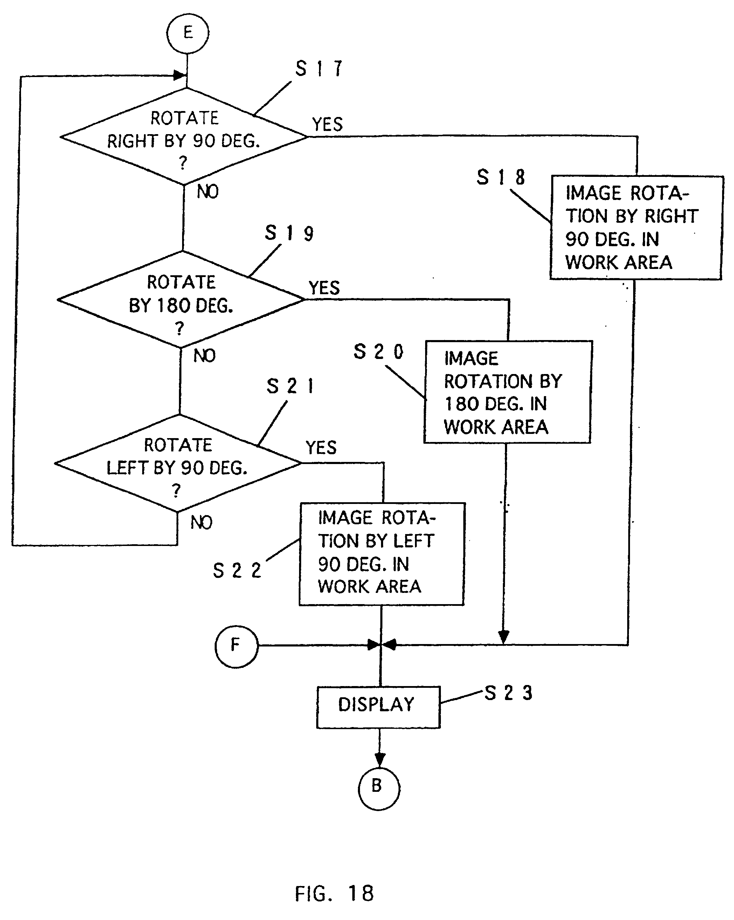

If the operator can not recognize the user code from the initial screen display, the process goes to the steps S17-S23 as shown in Figure 18 or the steps S24-S27 in Figure 17 for various image processing of rotation, enlargement, reduction or scrolling for recognition of the user code.

The steps S24 - S26 relate to the enlargement processing of the display. In case of the mail has a printed address form, the center portion of the mail is enlarged and displayed so as to place the enlarged portion at the center of the display. If the mail has a handwritten address information, the area excepting the stamp and zip code designating areas is enlarged and displayed at the center of the screen display.

These image operation is performed by using the image work area 47 in the first memory 23 as shown in Figure 2. For example, if the image is reduced after rotation, the operator make the rotation processing firstly by using the keyboard 30 in Figure 1. Once, the result of the rotation is written in the image work area 47 in the first memory 23. Then the stored rotation image is reduced in its size.

When the operator can recognize the user code by the display of the prossed image, the operation goes to the step S15 after inputting the use code at the step S14 as shown in Figure 17. If the operator finds out the error recognition of the user code by the reader, the operator can correct all columns of the user code by pressing the correction key for the all column correction.

After these operation, the correct characters for the zip code of this sample case, i.e., 「 1」, 「 0」, 「 1」, 「 5」, 「 3」, 「 2」and 「 4」, are displayed at the zip code portion 302 in the display. It is possible to enhance or modify the corrected characters with a color.

The result of the input operation of the user code is stored in the user code input result storage area 48 in the first memory 23 in Figure 2. When the step S14 finishes, the operation goes to the step S15. At this step S15, the user code stored in the user code input result storage area 48 is referred to the address data base stored in the second memory 25 in Figure 1 for verifying the corrected user code. The result of the verification is written in the verified code storage area 49 in the first memory 23.

When the verified code is correct, the code is transferred to the bar code printer 32 in Figure 1 and the bar code is printed on the mail. When the verified code is incorrect, the transferred bar code is printed on the mail.

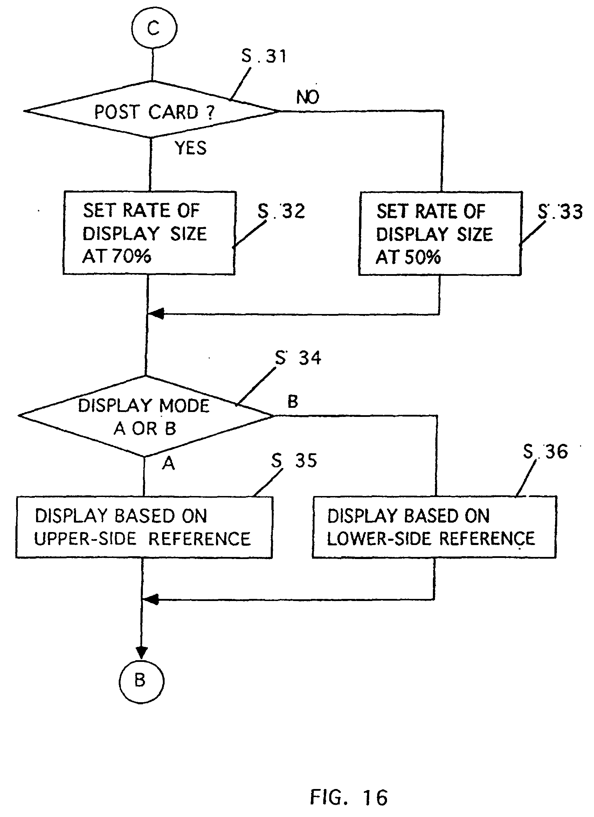

The steps 28-30 in Figure 15 show the operation of the rejected mail which has a printed address in a character line direction along the short axis of the mail. And the steps 31-36 in Figure 16 explain the operation of the rejected mail which has a handwritten address information.

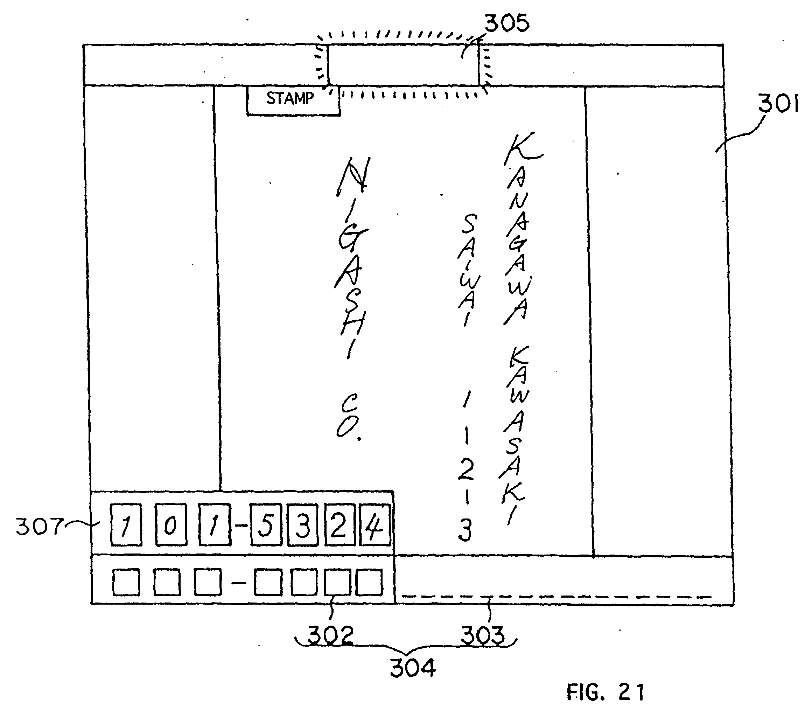

Figure 21 shows an example display for the handwritten address information. As the lower reference indication, the image 307 of the designated zip code area are additionally displayed at the indication area 302 for the user code. It is further possible to display the zip code image 307 at the position of the indicator 305.

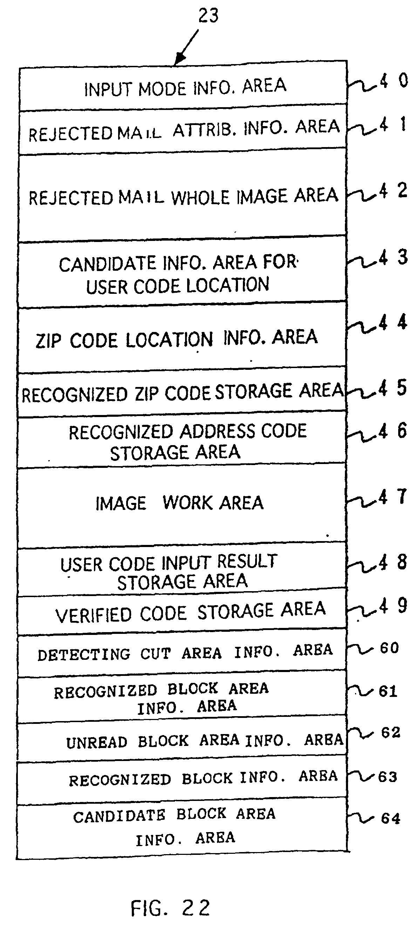

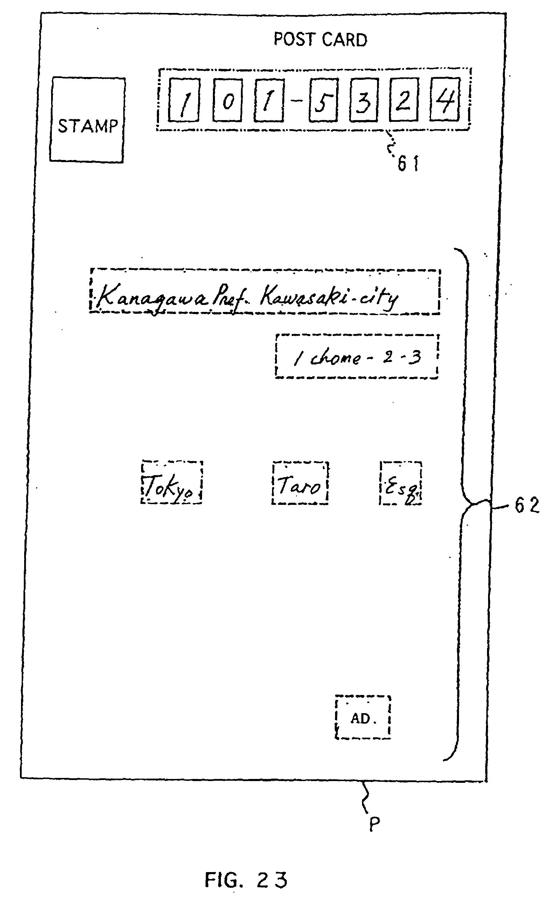

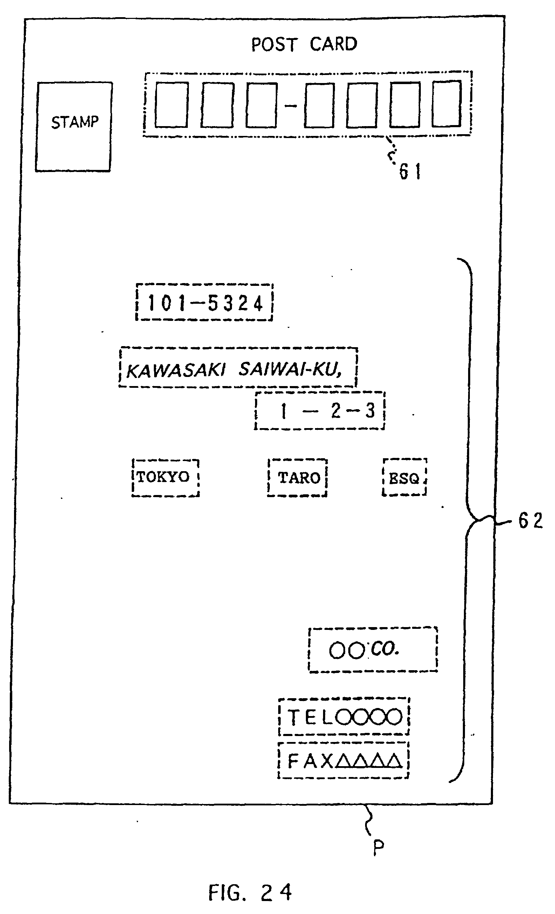

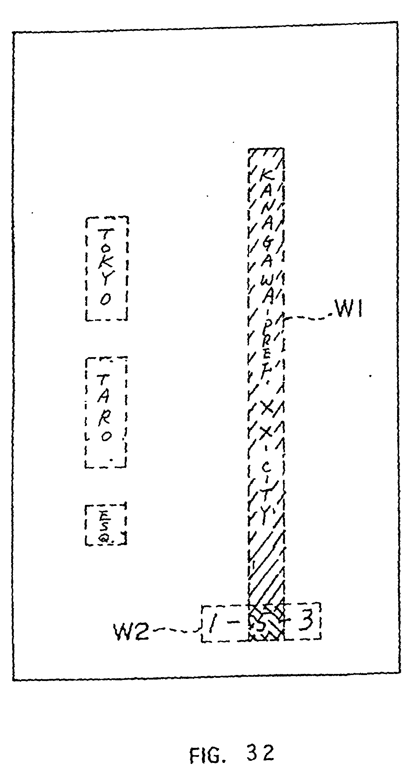

Figures 22 to 32 are explain the another embodiment of the invention. Figures 23 and 24 show another examples of the post card. In Figure 23, the zip code area is designated as a dotted frame 61 and the another address information including the address code are written in the area 62. In this area, an advertising information also can include. Figure 24 shows the example of the printed address information. In this case, the zip code is not usually written in the zip code designating area 61 but written in the address information area 62.

In these Figures, the dotted frames in the address information area 62 indicates the detecting cut block areas as explained in the later.

Figure 22 shows the memory map of the first memory 24 as shown in Figure 1 for using the particular system of this embodiment. The information areas 40-49 in Figure 22 are the same to the information areas 40-49 in Figure 2.

The information areas 60-64 are specialized for this embodiment. When the reader recognizes the possible location for the user code, the information with respect to the detecting cut block location are written in the information area 60. If the reader recognizes some of the block locations, the information for the recognized block location are written in the information area 61.

In the unread block location information area 62, the read block location information area 63 and the candidate block location information area 64, the following information are respectively stored.

In this embodiment, the CPU 21 in Figure 1 performs a judging operation for comparing the position of the recognized block location information to the one of the detecting cut block location information. The following table 2 shows the contents of the comparison. If the result of the comparison indicates the existence of the unread block, the information for the unread block is written in the unread block location information area 62 in the first memory 23. On the contrary, if the result of the comparison indicates the existence of the read block, the information for the read block is written in the read block location information area 63.

Further, if there are the candidate block, it is written in the candidate block location information area 64 in Figure 22.

These block location information are displayed on the whole image of the mail.

Table 2

| Comparison Result | Another detecting cut blocks exist | No other detecting cut block exists |
| --- | --- | --- |
| Coincide | Display unread block by a red frame for the nearest detecting cut block to the last block in which the user code is recognized | Display the coincide area as an read block with a green colored frame |
| Not coincide | The position between the difference area and the another detecting cut block: <br><br> If no overlapping--display the difference area as an unread block with a red colored frame; <br><br> If overlapping-- display the detecting cut block as an unread block with a a red colored frame. | Display the difference area as an unread block with a red colored frame. |

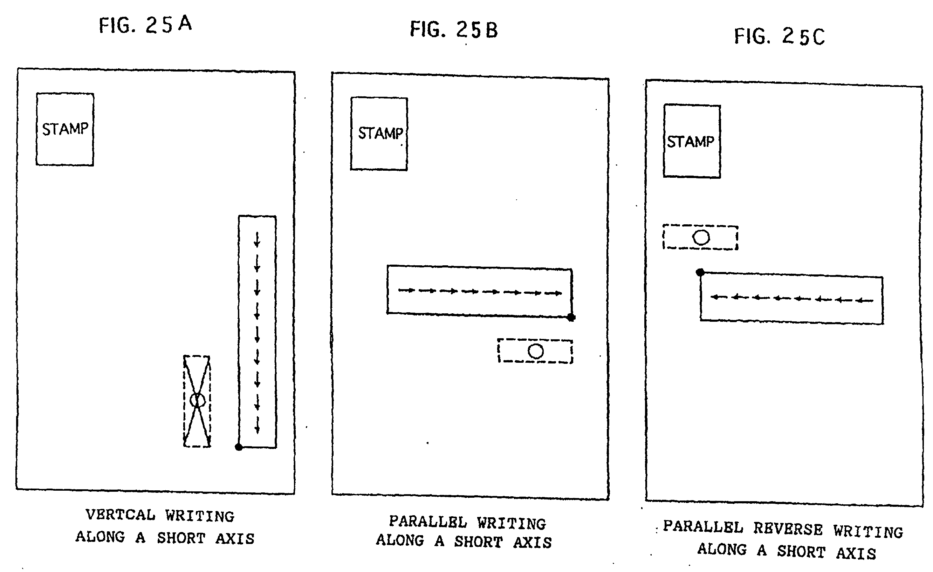

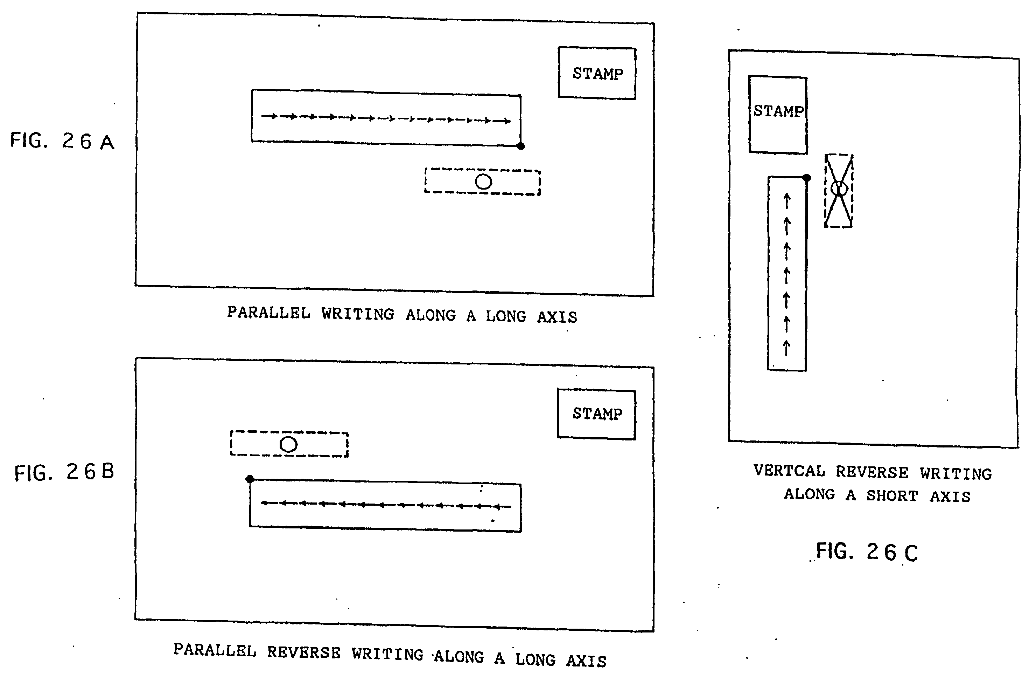

Figures 25A-25c and 26A-26C explain the detecting method for the detecting cut block location. The detection is performed by measuring a distance between a white dot point which marked at the center of the zip code block and a black dot point which is located at the end corner of the address information block which locates at the nearest position to the zip code block the as depicted in Figures.

In Figures, arrows indicate direction of the address information. Figure 25A-25C show the detecting cut blocks for post cards, and Figure 26A-256 show the ones for envelope mails. In Figures 25A and 26C, the character line of the address information is a vertical direction to the short axis of the mail. In Figure 25A,25B, 26A and 26BC, the respective character line of the address information is parallel to the short axis of the mail. But, the detection of the character line in Figure 25C is reverse to the one in Figure 25B.

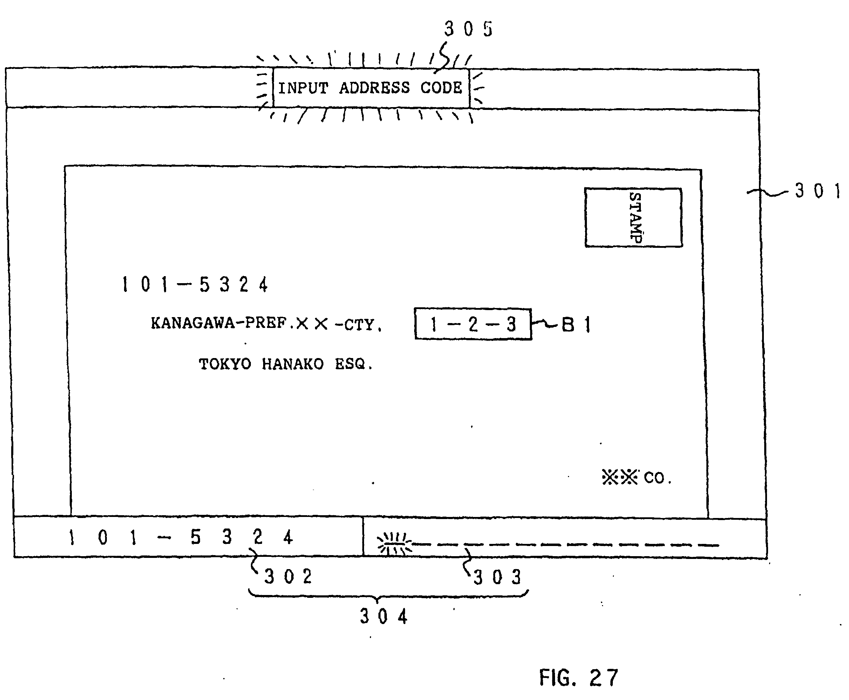

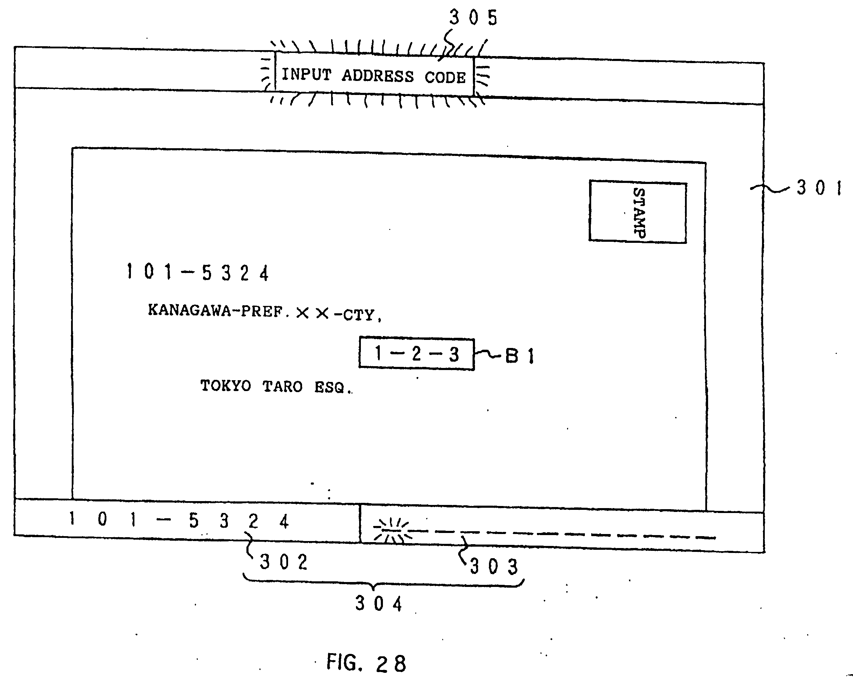

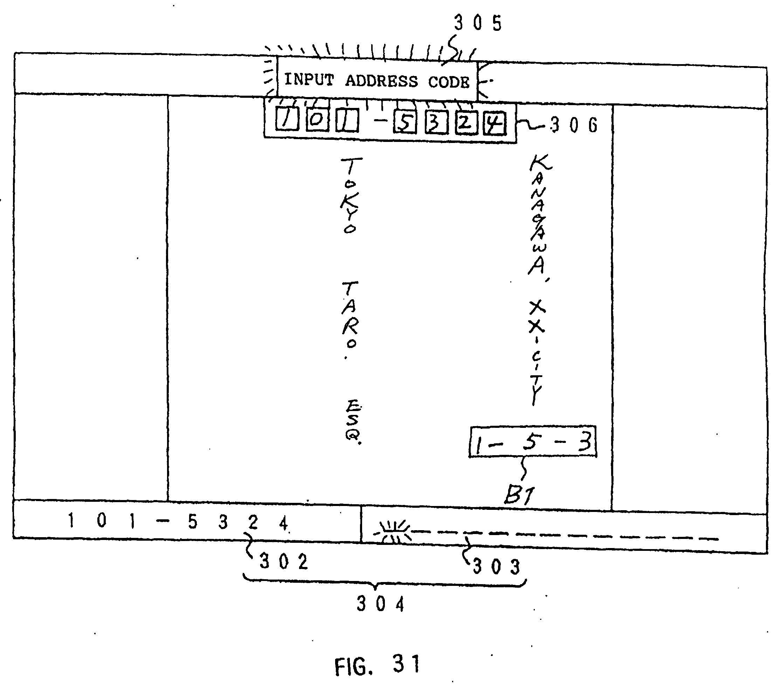

Figures 27 and 28 show example displays for printed address mails, and Figures 31 is an example display for a handwritten mail. These displays are basically same to the displays as depicted in Figures 7 and 8, and which include a whole image display area 301, a zip code input area 302, an address close input area 304 and an indicator 305.

As explained before, by reading out the recognized user code stored in the first memory, the result of the reader recognition is displayed in the user code display area 304 with blinking the columns which can not recognized by the reader.

In Figures 27, 28 and 31, the respective address code input area 303 has a blinking column which indicates that the corresponding column of the address code could not recognized. Further, an unread block area is indicated by a red colored flame B1. It is also possible to blink the unread block area B1.

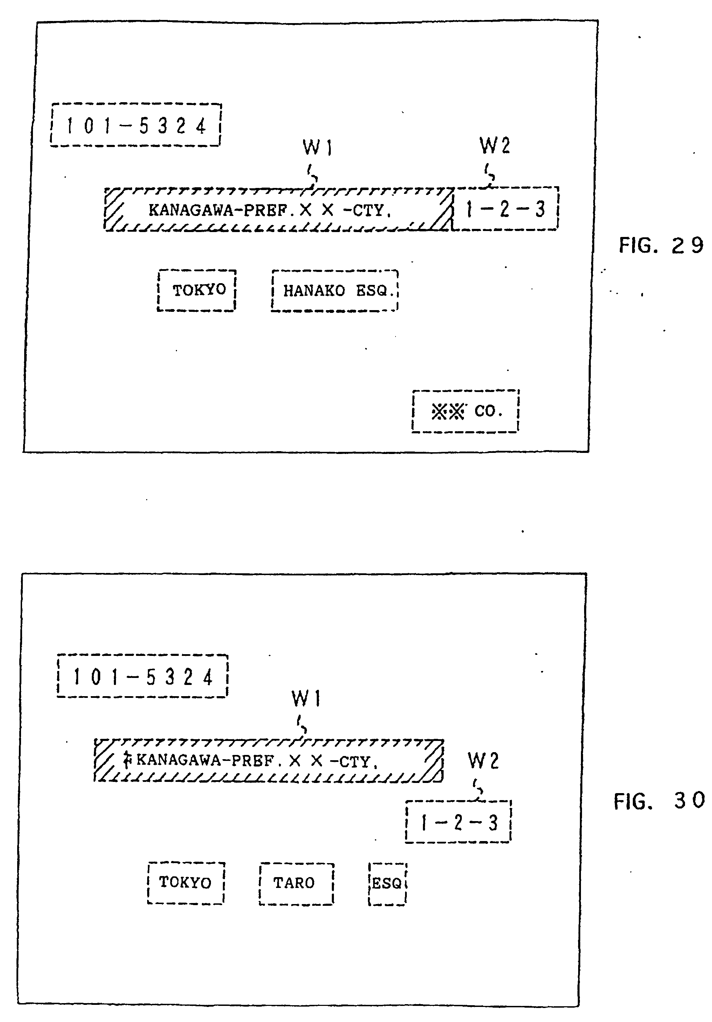

Figures 29, 30 and 32 show the recognition result for the mail as shown in Figures 27, 28 and 31. In Figures, a hatched block W1 indicates a recognized block area information and an unhatched block W2 indicates a detecting cut block area information.

Figures 29 and 30 show the cases that a plurality of detecting cut blocks exist in the address information and coincide to the detecting cut block area information. Under the comparison judgement as explained in the Table 2, the nearest detecting cut block to the recognized block is displayed with a red frame B1.

If the detecting cut block coincides to the detecting cut block and no other detecting cut block exists, the coincide area is displayed with a green frame for indicating as the recognized block area.

As explained above, since the recognized address information, the unread address information and the candidate address information are displayed on the same display screen in the apparatus of the invention, the operator can easily input the user code without referencing many corresponding positions for the zip code and the address code. Consequently. it can eliminate the operator's fatigue and can achieve a high degree of accuracy in the user code input operation.

It will be clear that the present invention is well adapted to carry out the objects and attain the ends and advantages mentioned as well as those inherent therein.

While a presently preferred embodiment has been described for purposes of this disclosure, numerous changes may be made which will readily suggest themselves to those skilled in the art.

**Claims**

**1.** A video coding apparatus suitable for inputting an user code for mail processing by reviewing address information including the user code on a display, comprising:

optical reading means (11) for providing digital signals representing a mail piece (P) as a whole image;

memory means (12) for storing information from the optical reading means (11);

character recognizing means (13, 14, 15, 16) for recognizing address information in the whole image;

code recognizing means (18) for identifying a user code in the address information and for generating a reject signal, if the user code cannot be recognized, and storing in a memory the whole image of the rejected mail piece, recognized address information, unrecognized address information and candidate information for the unrecognized address information;

means for displaying on a screen the whole image of the rejected mail piece, the recognized address information, the unrecognized address information and the candidate information so as to indicate some area for the unrecognized address information distinct from further information; and

means for inputting correction information for the unrecognized address information into the distinct area in the screen display.

**2.** The apparatus according to claim 1, wherein

the display means includes a whole image display area and a user code display area; and

the whole image of the unrecognized address information is displayed in the whole image display area and the user code of in the unrecognized address information is displayed at the user code display area; further a candidate address information for the user code is displayed distinctly in the whole image of the unrecognized address information.

3. The apparatus according to claim 1, wherein the address information comprises of address column information.

4. The apparatus according to claim 1, wherein the address information comprises detecting cut block area information.

5. The apparatus according to claim 3, wherein the address column information is displayed so as to distinguish the recognized last column from the other.

6. The apparatus according to claim 2, wherein the display means further includes an indicator for indicating which kind of information should be input.

7. The apparatus according to claim 6, wherein the indicator displays the information in the same color as is used for displaying the read column information area on the whole image area of the display so as to distinguish it from others.

8. The apparatus according to claim 1, comprising

means for storing candidate block area information for the user code if some portion of the user code is recognized, a recognized block area information for indicating location of the recognized address information and support display information for deciding support position by comparing the candidate block area information and the recognized block area information;

means for displaying the whole image of the rejected mail and a plurality of dedicate areas for the user code;

the dedicate areas are **characterized in that** the areas are spectively displayed in a different ways in accordance with support display information.

9. The apparatus according to claim 8, wherein the input means inputs all detecting cut block area information as the candidate block area information if a plurality of detecting cut block area information exist and the read block area information coincide with the finally recognized block area information; and
the display means displays the all candidate block area information on the whole image.

10. The apparatus according to claim 8, wherein the input means inputs the recognized block area information as the candidate block area information by comparing the respective position of the four corner points of the recognized block area information to the center points of another detecting cut block area.

11. The apparatus according to claim 8, wherein the input means inputs the recognized block area information as the candidate block area information by comparing a distance between the nearest or most far point among the four corner points of the recognized block area information to a stamp and the center points of another detecting cut block area.

12. The apparatus according to claim 8, wherein the input means inputs an overlapped detecting cut area information as the candidate block area information if a difference area of the recognized information overlaps to another detecting cut area information in case of the recognized block area information does not coincide to the final recognized block area information; and
the display means displays the candidate block area information as the unread block area information.

13. The apparatus according to claim 8, wherein the display means displays the support information with different ways in accordance with the information.

14. A method for video coding for inputting an user code for mail processing by reviewing a display of a whole image of address information for the mail comprising the steps of:

providing digital signals representing a mail piece (P) as a whole image;

recognizing address information in the whole image;

identifying a user code in the address information;

generating a reject signal, if the user code cannot be recognized in the address information, and storing in a memory the whole image of the surface of the rejected mail piece, recognized address information, unrecognized address information and candidate information for the unrecognized address information;

displaying the whole image of the rejected mail piece, the recognized address information and the unrecognized address information so as to distinguish the recognized address information from the unrecognized address information;

inputting correction information for the unrecognized address information in accordance with the distinct display; and

storing the corrected address information to the memory.

**15.** Method according to claim 14, with the further step of

storing candidate block area information for the user code, in case of the user code is partially recognized, a recognized block area information for indicating possible location of the address information and support display information for designating a support position with comparing the candidate block area information to the recognized block area information;

displaying the whole image of the address information of the rejected mail accompanying with a plurality of dedicate area information in a different way in accordance with the support display information.

**Patentansprüche**

**1.** Videocodierungsvorrichtung, geeignet zum Eingeben eines Benutzercodes zur Postverarbeitung, indem eine Adresseninformation, die den Benutzercode einschließt, auf einer Anzeige überprüft wird, umfassend:

eine optische Leseeinrichtung (11) zum Bereitstellen digitaler Signale, die ein Poststück (P) als ein Gesamtbild darstellen;

eine Speichereinrichtung (12) zum Speichern einer Information von der optischen Leseeinrichtung (11);

eine Zeichenerkennungseinrichtung (13, 14, 15, 16) zum Erkennen einer Adresseninformation in dem Gesamtbild;

eine Code-Erkennungseinrichtung (18) zum Identifizieren eines Benutzercodes in der Adresseninformation und zum Erzeugen eines Zurückweisungssignals, wenn der Benutzercode nicht erkannt werden kann, und zum Speichern des Gesamtbilds des zurückgewiesenen Poststücks, einer erkannten Adresseninformation, einer nicht erkannten Adresseninformation und einer Kandidateninformation für die nicht erkannte Adresseninformation in einem Speicher;

eine Einrichtung zum Anzeigen des Gesamtbilds des zurückgewiesenen Poststücks, der erkannten Adresseninformation, der nicht erkannten Adresseninformation und der Kandidateninformation auf einem Schirm, um so einen bestimmten Bereich für die nicht erkannte Adresseninformation unterschieden von einer weiteren Information anzuzeigen; und

eine Einrichtung zum Eingeben einer Korrekturinformation für die nicht erkannte Adresseninformation in den unterschiedenen Bereich in der Bildschirmanzeige.

**2.** Vorrichtung nach Anspruch 1, **dadurch gekennzeichnet, dass**

die Anzeigeeinrichtung ein Gesamtbild-Anzeigegebiet und ein Benutzercode-Anzeigegebiet einschließt;

und das Gesamtbild der nicht erkannten Adresseninformation in dem Gesamtbild-Anzeigegebiet angezeigt wird, und der Benutzercode in der nicht erkannten Adresseninformation in dem Benutzercode-Anzeigegebiet angezeigt wird; weiter eine Kandidatenadresseninformation für den Benutzercode unterschieden in dem Gesamtbild der nicht erkannten Adresseinformation angezeigt wird.

3. Vorrichtung nach Anspruch 1, **dadurch gekennzeichnet, dass** die Adresseninformation eine Adressenspalteninformation umfasst.

4. Vorrichtung nach Anspruch 1, **dadurch gekennzeichnet, dass** die Adresseninformation eine Erfassungs-Schnittblock-Gebietsinformation umfasst.

5. Vorrichtung nach Anspruch 3, **dadurch gekennzeichnet, dass** die Adressenspalteninformation angezeigt wird, um so die erkannte letzte Spalte von der anderen zu unterscheiden.

6. Vorrichtung nach Anspruch 2, **dadurch gekennzeichnet, dass** die Anzeigeeinrichtung weiter ein Anzeigemittel zum Anzeigen einschließt, welche Art von Information eingegeben werden sollte.

7. Vorrichtung nach Anspruch 6, **dadurch gekennzeichnet, dass** das Anzeigemittel die Information in der gleichen Farbe anzeigt, wie sie zum Anzeigen des gelesenen Spalteninformationsgebiets auf dem Gesamtbildgebiet der Anzeige verwendet wird, um sie so von anderen zu unterscheiden.

8. Vorrichtung nach Anspruch 1, umfassend:

eine Einrichtung zum Speichern einer Kandidatenblock-Gebietsinformation für den Benutzercode, wenn ein bestimmter Abschnitt des Benutzercodes erkannt ist, einer erkannten Block-Gebietsinformation zum Anzeigen eines Orts der erkannten Adresseninformation und einer Unterstützungs-Anzeigeinformation zum Festlegen einer Unterstützungsposition durch ein Vergleichen der Kandidatenblock-Gebietsinformation und der erkannten Block-Gebietsinformation;

eine Einrichtung zum Anzeigen des Gesamtbilds der zurückgewiesenen Post und einer Vielzahl von zugewiesenen Gebieten für den Benutzercode;

wobei die zugewiesenen Gebiete **dadurch gekennzeichnet sind, dass** die Gebiete jeweils auf unterschiedliche Arten in Übereinstimmung mit der Unterstützungs-Anzeigeinformation angezeigt werden.

9. Vorrichtung nach Anspruch 8, **dadurch gekennzeichnet, dass** die Eingabeeinrichtung die gesamte Erfassungsschnitt-Block-Gebietsinformation als die Kandidatenblock-Gebietsinformation eingibt, wenn eine Vielzahl von Erfassungsschnitt-Block-Gebietsinformationen vorhanden sind und die gelesene Block-Gebietsinformation mit der endgültig erkannten Block-Gebietsinformation übereinstimmt; und
die Anzeigeeinrichtung die gesamte Kandidatenblock-Gebietsinformation auf dem Gesamtbild anzeigt.

10. Vorrichtung nach Anspruch 8, **dadurch gekennzeichnet, dass** die Eingabeeinrichtung die erkannte Block-Gebietsinformation als die Kandidatenblock-Gebietsinformation eingibt, indem die jeweilige Position der vier Eckpunkte der erkannten Block-Gebietsinformation mit den zentralen Punkten eines anderen Erfassungsschnitt-Block-Gebiets verglichen wird.

11. Vorrichtung nach Anspruch 8, **dadurch gekennzeichnet, dass** die Eingabeeinrichtung die erkannte Block-Gebietsinformation als die Kandidatenblock-Gebietsinformation eingibt, indem ein Abstand zwischen dem nächsten und entferntesten unter den vier Eckpunkten der erkannten Block-Gebietsinformation zu einem Stempel und den zentralen Punkten eines anderen Erfassungsschnitt-Block-Gebiets verglichen wird.

12. Vorrichtung nach Anspruch 8, **dadurch gekennzeichnet, dass** die Eingabeeinrichtung eine überlappende Erfassungsschnitt-Gebietsinformation als die Kandidatenblock-Gebietsinformation eingibt, wenn ein Differenzgebiet der erkannten Information mit einer anderen Erfassungsschnitt-Gebietsinformation in dem Fall überlappt, dass die erkannte Blockgebiets-Information nicht mit der endgültig erkannten Block-Gebietsinformation übereinstimmt; und die Anzeigeeinrichtung die Kandidatenblock-Gebietsinformation als die ungelesene Block-Gebietsinformation anzeigt.

**13.** Vorrichtung nach Anspruch 8, **dadurch gekennzeichnet, dass** die Anzeigevorrichtung die Unterstützungsinformation auf unterschiedliche Arten in Übereinstimmung mit der Information anzeigt.

**14.** Verfahren zum Videocodieren zum Eingeben eines Benutzercodes zur Postverarbeitung, indem eine Anzeige eines Gesamtbilds einer Adresseninformation für die Post überprüft wird, umfassend die Schritte:

Bereitstellen digitaler Signale, die ein Poststück (P) als ein Gesamtbild darstellen;

Erkennen einer Adresseninformation in dem Gesamtbild;

Identifizieren eines Benutzercodes in der Adresseninformation;

Erzeugen eines Zurückweisungssignals, wenn der Benutzercode in der Adresseninformation nicht erkannt werden kann, und Speichern des Gesamtbilds der Oberfläche des zurückgewiesenen Poststücks, einer erkannten Adresseninformation, einer nicht erkannten Adresseninformation und einer Kandidateninformation für die nicht erkannte Adresseninformation in einem Speicher;

Anzeigen des Gesamtbilds des zurückgewiesenen Poststücks, der erkannten Adresseninformation und der nicht erkannten Adresseninformation, um so die erkannte Adresseninformation von der nicht erkannten Adresseninformation zu unterscheiden;

Eingeben einer Korrekturinformation für die nicht erkannte Adresseninformation in Übereinstimmung mit der unterschiedenen Anzeige; und

Speichern der korrigierten Adresseninformation in den Speicher.

**15.** Verfahren nach Anspruch 14, mit dem weiteren Schritt eines
Speicherns einer Kandidatenblock-Gebietsinformation für den Benutzercode in dem Fall, dass der Benutzercode teilweise erkannt wird, einer erkannten Block-Gebietsinformation zum Anzeigen eines möglichen Orts der Adresseninformation und einer Unterstützungs-Anzeigeinformation zum Kennzeichnen einer Unterstützungsposition durch Vergleichen der Kandidatenblock-Gebietsinformation mit der erkannten Block-Gebietsinformation;
Anzeigen des Gesamtbilds der Adresseninformation der zurückgewiesenen Post, die von einer Vielzahl von zugewiesenen Gebietsinformationen auf eine unterschiedliche Art in Übereinstimmung mit der Unterstützungs-Anzeigeinformation begleitet wird.

**Revendications**

**1.** Appareil de codage vidéo approprié pour entrer un code utilisateur pour le traitement de courrier en passant en revue des informations d'adresse incluant le code utilisateur sur un afficheur, comprenant :

un moyen de lecture optique (11) pour fournir des signaux numériques représentant un élément de courrier (P) en tant qu'image entière ;
un moyen formant mémoire (12) pour stocker des informations en provenance du moyen de lecture optique (11) ;
un moyen de reconnaissance de caractères (13, 14, 15, 16) pour reconnaître des informations d'adresse dans l'image entière ;
un moyen de reconnaissance de code (18) pour identifier un code utilisateur dans les informations d'adresse et pour produire un signal de rejet, si le code utilisateur ne peut pas être reconnu, et pour stocker dans une mémoire l'image entière de l'élément de courrier rejeté, des informations d'adresse reconnue, des informations d'adresse non reconnue, et des informations candidates pour les informations d'adresse non reconnue ;
un moyen pour afficher sur un écran l'image entière de l'élément de courrier rejeté, les informations d'adresse reconnue, les informations d'adresse non reconnue, et les informations candidates de façon à indiquer une certaine zone pour les informations d'adresse non reconnue distincte d'informations supplémentaires ; et
un moyen pour entrer des informations de correction pour les informations d'adresse non reconnue dans la zone distincte sur l'écran d'affichage.

**2.** Appareil selon la revendication 1, dans lequel :

le moyen d'affichage comprend une zone d'affichage d'image entière et une zone d'affichage de code utilisateur ; et

l'image entière des informations d'adresse non reconnue est affichée dans la zone d'affichage d'image entière, et le code utilisateur dans les informations d'adresse non reconnue est affiché sur la zone d'affichage de code utilisateur ; de plus, des informations d'adresse candidate pour le code utilisateur sont affichées distinctement dans l'image entière des informations d'adresse non reconnue.

**3.** Appareil selon la revendication 1, dans lequel les informations d'adresse comprennent des informations de colonne d'adresse.

**4.** Appareil selon la revendication 1, dans lequel les informations d'adresse comprennent des informations de zone formant bloc découpé de détection.

**5.** Appareil selon la revendication 3, dans lequel les informations de colonne d'adresse sont affichées de façon à distinguer la dernière colonne reconnue de l'autre.

**6.** Appareil selon la revendication 2, dans lequel le moyen d'affichage comprend de plus un indicateur pour indiquer quelles sortes d'informations devraient être entrées.

**7.** Appareil selon la revendication 6, dans lequel l'indicateur affiche les informations dans la même couleur que celle utilisée pour afficher la zone d'informations de colonne lue sur la zone d'image entière de l'afficheur de façon à la distinguer des autres.

**8.** Appareil selon la revendication 1, comprenant :

un moyen pour stocker des informations de zone formant bloc candidat pour le code utilisateur si une certaine partie du code utilisateur est reconnue, des informations de zone formant bloc reconnu pour indiquer l'emplacement des informations d'adresse reconnue et des informations d'affichage de support pour décider d'une position de support en comparant les informations de zone formant bloc candidat et les informations de zone formant bloc reconnu ;

un moyen pour afficher l'image entière du courrier rejeté et une pluralité de zones dédiées pour le code utilisateur ;

les zones dédiées sont **caractérisées en ce que** les zones sont respectivement affichées de différentes façons selon des informations d'affichage de support.

**9.** Appareil selon la revendication 8, dans lequel le moyen d'entrée entre toutes les informations de zone formant bloc découpé de détection comme les informations de zone formant bloc candidat si une pluralité d'informations de zone formant bloc découpé de détection existent et les informations de zone formant bloc lu coïncident avec les informations de zone formant bloc finalement reconnu ; et

le moyen d'affichage affiche toutes les informations de zone formant bloc candidat sur l'image entière.

**10.** Appareil selon la revendication 8, dans lequel le moyen d'entrée entre les informations de zone formant bloc reconnu en tant qu'informations de zone formant bloc candidat en comparant la position respective des quatre points d'angle des informations de zone formant bloc reconnu aux points de centre d'une autre zone formant bloc découpé de détection.

**11.** Appareil selon la revendication 8, dans lequel le moyen d'entrée entre les informations de zone formant bloc reconnu en tant qu'informations de zone formant bloc candidat en comparant une distance entre le point le plus proche ou le plus lointain parmi les quatre points d'angle des informations de zone formant bloc reconnu à un timbre et les points de centre d'une autre zone formant bloc découpé de détection.

**12.** Appareil selon la revendication 8, dans lequel le moyen d'entrée entre des informations de zone découpée de détection chevauchée en tant qu'informations de zone formant bloc candidat si une zone de différence des informations reconnues chevauche d'autres informations de zone découpée de détection au cas où les informations de zone formant bloc reconnu ne coïncident pas avec les informations finales de zone formant bloc reconnu ; et

le moyen d'affichage affiche les informations de zone formant bloc candidat en tant qu'informations de zone formant bloc non lu.

**13.** Appareil selon la revendication 8, dans lequel le moyen d'affichage affiche les informations de support de différentes façons selon les informations.

**14.** Procédé pour le codage vidéo pour entrer un code utilisateur pour traiter du courrier en passant en revue un affichage d'une image entière d'informations d'adresse pour le courrier, comprenant les étapes consistant à :

fournir des signaux numériques représentant un élément de courrier (P) en tant qu'image entière ;
reconnaître des informations d'adresse dans l'image entière ;
identifier un code utilisateur dans les informations d'adresse ;
produire un signal de rejet, si le code utilisateur ne peut pas être reconnu dans les informations d'adresse, et stocker dans une mémoire l'image entière de la surface de l'élément de courrier rejeté, des informations d'adresse reconnue, des informations d'adresse non reconnue, et des informations candidates pour les informations d'adresse non reconnue ;
afficher l'image entière de l'élément de courrier rejeté, les informations d'adresse reconnue et les informations d'adresse non reconnue de façon à distinguer les informations d'adresse reconnue des informations d'adresse non reconnue ;
entrer des informations de correction pour les informations d'adresse non reconnue selon l'affichage distinct ; et
stocker les informations d'adresse corrigées dans la mémoire.

**15.** Procédé selon la revendication 14, avec l'étape supplémentaire consistant à :

stocker des informations de zone formant bloc candidat pour le code utilisateur, dans le cas où le code utilisateur est partiellement reconnu, des informations de zone formant bloc reconnu pour indiquer un emplacement possible des informations d'adresse et des informations d'affichage de support pour désigner une position de support en comparant les informations de zone formant bloc candidat aux informations de zone formant bloc reconnu ;
afficher l'image entière des informations d'adresse du courrier rejeté accompagnées d'une pluralité d'informations de zone dédiée d'une façon différente selon les informations d'affichage de support.

FIG. 1

23

| | |
|---|---|
| INPUT MODE INFO. AREA | 4 0 |
| REJECTED MAIL ATTRIB. INFO. AREA | 4 1 |
| REJECTED MAIL WHOLE IMAGE AREA | 4 2 |
| CANDIDATE INFO. AREA FOR USER CODE LOCATION | 4 3 |
| ZIP CODE LOCATION INFO. AREA | 4 4 |
| RECOGNIZED ZIP CODE STORAGE AREA | 4 5 |
| RECOGNIZED ADDRESS CODE STORAGE AREA | 4 6 |
| IMAGE WORK AREA | 4 7 |
| USER CODE INPUT RESULT STORAGE AREA | 4 8 |
| VERIFIED CODE STORAGE AREA | 4 9 |
| UNREAD COLUMN INFO. AREA | 5 0 |
| READ COLUMN INFO. AREA | 5 1 |
| CABDIDATE ADDRESS LOCATION INFO. | 5 2 |

FIG. 2

FIG. 3

FIG. 4

POST CARD

STAMP

| / | 0 | / | 5 | 3 | 2 | 4 |

6·1

6·2

Kanagawa Pref.
Kawasaki-City
Saiwai-Ku, 1-2-3

P

FIG. 5

POST CARD

STAMP

6 1

6 2

101-53241-2-3
KANAGAWA-PREFECTURE
KAWASAKI CITY
SAIWAI-KU, 1 – 2 – 3
HIGASHI YANAGI CO.

P

FIG. 6

FIG. 7

301

305

INPUT ZIP CODE

STAMP

B1

KAWASAKI CITY   SAIWAI-KU, 1 − 2 − 3
KANAGAWA-PREFECTURE

HIGASHI YANAGI CO.

306

□□−532□

303

1□□−532□

ZIP CODE  302

304

25

EP 0 726 540 B1

INPUT ADDRESS CODE 305

301

STAMP

B2

|101- 5324|

KAWASAKI CITY   SAIWAI-KU, 1 − 2 − 3
KANAGAWA-PREFECTURE

HIGASHI YANAGI CO.

| O | − 5 3 2 4

302    303

304

FIG.8

3 0 5

INPUT ZIP CODE

~ 3 0 1

FIG. 9A

3 0 5 a        3 0 5 b

| INPUT ZIP CODE | INPUT ADDRESS CODE | |

~ 3 0 1

FIG. 9B

3 0 5 a        3 0 5 b

| INPUT ZIP CODE | INPUT ADDRESS CODE |

~ 3 0 1

FIG. 9C

| RECOGNITION RESULT OF READER | | | SCREEN DISPLAY | | | | |
|---|---|---|---|---|---|---|---|
| ZIP CODE | ADDRESS CODE | ADDRESS AREA INFO. IN CABDIDATE | ZIP CODE | ADDRESS CODE | ADDRESS AREA INFO. IN CABDIDATE ADDRESS LOCATION | CABDIDATE ADDRESS AREA INFO. | INDICATOR DISPLAY |
| UNREAD ALL COLUMNS | UNREAD ALL COLUMNS | NONE | NONE | NONE | NONE | DISPLAY (YELLOW) | RED DISPLAY |
| READ PARTIAL COLUMNS | UNREAD ALL COLUMNS | NONE | DIAPLAY OF UNREAD COL. INFO. AREA (RED) | NONE | NONE | DISPLAY (YELLOW) | RED DISPLAY |
| READ ALL COLUMNS | UNREAD ALL COLUMNS | NONE | DISPLAY OF READ COLUMN INFO. AREA (GREEN) | NONE | NONE | NONE | GREEN DISPLAY |
| READ ALL COLUMNS | UNREAD ALL COLUMNS | EXIST | NONE | NONE | DISPLAY (GREEN) | NONE | GREEN DISPLAY |
| READ ALL COLUMNS | READ PARTIAL COLUMNS | EXIST | NONE | DISPLAY OF READ COLUMN INFO. AREA (GREEN) | DISPLAY (GREEN) | NONE | GREEN DISPLAY |

FIG. 10

| RESULT OF READER RECOGNITION FOR | PATTERN | UNRED FOR CONSECUTIVE 2 COLUMNS (EDGES) | | UNRED FOR CONSECUTIVE 2 COLUMNS (OTHERS) | | UNREAD FOR MORE THEN 3 COLUMNS | | | UNREAD FOR ONLY 1 COLUMN |
|---|---|---|---|---|---|---|---|---|---|
| LOWER 4 COLUMNS OF ZIP CODE | | _ _ 2 4 | 5 3 _ _ | 5 _ _ 4 | _ 3 2 _ | 5 _ _ _ | _ 3 _ _ | _ _ _ _ _ | 5 _ 2 4 |
| RESULT INFO.DISPLAY FOR ZIP CODE INPUT AERA | | ☼☼ 2 4 | | ☼☼☼☼ | | | | | 5 ☼ 2 4 |
| INPUT CODE | | INPUT CONSECUTIVE 2 COLUMNS | | INPUT ALL COLUMNS | | | | | INPUT ONE COLUMN |

※ 1. SUPPOSE THE CORRECT LOWER 4 COLUMNS OF ZIP CODE ARE 「5324」
※ 2. UNREAD COLUMS IS INDICATED BY 「_」

FIG. 11

| RESULT OF READER RECOGNITION FOR | PATTERN | UNRED FOR MORE THAN CONSECUTIVE 2 COLUMNS | | | UNRED FOR LEFT CONSECUTIVE 2 COLUMNS | UNREAD FOR ONLY 1 COLUMN |
|---|---|---|---|---|---|---|
| UPPER 3 COLUMNS OF ZIP CODE | | — — — | 1 _ _ | _ 0 _ | _ _ 1 | _ 0 1 |
| RESULT INFO.DISPLAY AT ZIP CODE INPUT AERA | | ☼☼☼ | | | ☼☼1 | ☼01 |
| INPUT CODE | | · INPUT ALL COLUMNS | | | INPUT 2 COLUMNS | INPUT ONE COLUMN |

※1. SUPPOSE THE CORRECT UPPER 3 COLUMNS OF ZIP CODE ARE 「101」

※2. UNREAD COLUMNS IS INDICATED BY 「_」

FIG. 12

EP 0 726 540 B1

| RESULT OF READER RECOGNITION FOR | PATTERN | UNRED FOR CONSECUTIVE 2 COLUMNS (EDGES) | | | UNRED FOR ALTERNATE 2 COLUMNS | | UNRED FOR COLUMNS (OTHERS) | UNREAD FOR MORE THAN 3 COLUMNS | UNREAD FOR ONLY 1 COLUMN |
|---|---|---|---|---|---|---|---|---|---|
| LOWER 4 COLUMNS OF ZIP CODE | | _ _2 4 | 5 3 _ _ | 5 _ _ 4 | 5 _ 2 _ | _ 3 _ 4 | _ 2 4 _ | 5 _ _ _ _ | 5 _ 2 4 |
| RESULT INFO.DISPLAY FOR ZIP CODE INPUT AERA | | ☼☼ 2 4 | | | 5 ☼☼☼☼ | | ☼☼☼☼ | | 5 ☼ 2 4 |
| INPUT CODE | | INPUT CONSECUTIVE 2 COLUMNS | | | INPUT CONSECUTIVE 3 COLUMNS | | INPUT ALL COLUMNS | | INPUT ONE COLUMN |

※1. SUPPOSE THE CORRECT LOWER 4 COLUMNS OF ZIP CODE ARE 「5324」

※2. UNREAD COLUMS IS INDICATED BY 「 _ 」

FIG. 13

EP 0 726 540 B1

START

S 1

WINDOW DISPLAY OF
OPERATION

D

S 2

REJECTED
POSTAL MATTER
EXISTS ?

NO

YES

S 4

OPERATION
COMPLETED
?

NO

YES

INPUT RESULT OF
RECOGNITION &
IMAGE OF REJECTED
POSTAL MATTER

S 3

END

A

FIG. 14

32

FIG. 15

FIG. 16

B

S 1 4

CODE INPUT ?

YES

NO

S 1 6

ROTATION, ENLARGE/REDUCE, OR SCROLL ?

ROTA-TION

SCROLL

S 1 5

STORE INPUT CODE IN STORAGE AREA FOR VERIFIED CODE

D

E

ENLARGE/ REDUCE

S 2 4

PRINTED FONT USED ?

NO (HAND-WRITTEN)

YES

S 2 5

ENLARGE IMAGE OF POSTAL MATTER FROM CENTER THEREOF

S 2 7

SCROLLING

S 2 6

ENLARGE FROM CENTER OF IMAGE FROM WHICH LOCATIONS OF STAMP & ZIP CODE ARE REMOVED

F

FIG. 17

FIG. 18

FIG. 19

FIG. 20

FIG. 21

23

| | |
|---|---|
| INPUT MODE INFO. AREA | 40 |
| REJECTED MAIL ATTRIB. INFO. AREA | 41 |
| REJECTED MAIL WHOLE IMAGE AREA | 42 |
| CANDIDATE INFO. AREA FOR USER CODE LOCATION | 43 |
| ZIP CODE LOCATION INFO. AREA | 44 |
| RECOGNIZED ZIP CODE STORAGE AREA | 45 |
| RECOGNIZED ADDRESS CODE STORAGE AREA | 46 |
| IMAGE WORK AREA | 47 |
| USER CODE INPUT RESULT STORAGE AREA | 48 |
| VERIFIED CODE STORAGE AREA | 49 |
| DETECTING CUT AREA INFO. AREA | 60 |
| RECOGNIZED BLOCK AREA INFO. AREA | 61 |
| UNREAD BLOCK AREA INFO. AREA | 62 |
| RECOGNIZED BLOCK INFO. AREA | 63 |
| CANDIDATE BLOCK AREA INFO. AREA | 64 |

FIG. 22

FIG. 23

POST CARD

STAMP

☐ ☐ ☐ — ☐ ☐ ☐ ☐

61

101—5324

KAWASAKI SAIWAI-KU,

1 — 2 — 3

TOKYO    TARO    ESQ.

62

○○ CO.

TEL ○○○○

FAX △△△△

P

FIG. 2 4

## FIG. 25A

STAMP

VERTCAL WRITING
ALONG A SHORT AXIS

## FIG. 25B

STAMP

PARALLEL WRITING
ALONG A SHORT AXIS

## FIG. 25C

STAMP

PARALLEL REVERSE WRITING
ALONG A SHORT AXIS

EP 0 726 540 B1

EP 0 726 540 B1

STAMP

VERTICAL REVERSE WRITING
ALONG A SHORT AXIS

FIG. 26 C

STAMP

PARALLEL WRITING ALONG A LONG AXIS

FIG. 26 A

STAMP

PARALLEL REVERSE WRITING ALONG A LONG AXIS

FIG. 26 B

44

EP 0 726 540 B1

305

INPUT ADDRESS CODE

301

STAMP

101 - 5 3 2 4

KANAGAWA-PREF.✕✕-CTY.  [ 1 - 2 - 3 ]～B1

TOKYO HANAKO ESQ.

※※ CO.

1 0 1 - 5 3 2 4

302

303

304

FIG. 27

EP 0 726 540 B1

305

INPUT ADDRESS CODE

301

STAMP

101-5324

KANAGAWA-PREF. ××-CTY.

1-2-3 ~B1

TOKYO TARO ESQ.

1 0 1 - 5 3 2 4

302     303

304

FIG. 28

FIG. 2 9

FIG. 3 0

305

INPUT ADDRESS CODE

|1|0|1|—|5|3|2|4| — 306

TOKYO TARO. ESQ.

KANAGAWA, XX-CITY

|1 — 5 — 3|

B1

1 0 1 — 5 3 2 4  — 302

303

304

FIG. 31

FIG. 32